(19) **Europäisches Patentamt / European Patent Office / Office européen des brevets**

(11) **EP 4 317 551 A1**

(12) **EUROPEAN PATENT APPLICATION**
published in accordance with Art. 153(4) EPC

(43) Date of publication:
**07.02.2024 Bulletin 2024/06**

(21) Application number: **22774949.6**

(22) Date of filing: **01.03.2022**

(51) International Patent Classification (IPC):
*D01F 6/94* (2006.01)   *B01J 20/26* (2006.01)
*D01D 5/04* (2006.01)   *D01F 6/50* (2006.01)
*D04H 1/728* (2012.01)

(52) Cooperative Patent Classification (CPC):
**B01J 20/26; D01D 5/04; D01F 6/50; D01F 6/94; D04H 1/728**

(86) International application number:
**PCT/JP2022/008667**

(87) International publication number:
**WO 2022/202152 (29.09.2022 Gazette 2022/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.03.2021   JP 2021053901**

(71) Applicant: **NITTO DENKO CORPORATION**
**Ibaraki-shi**
**Osaka 567-8680 (JP)**

(72) Inventors:
- **GOTO Chisato**
  **Ibaraki-shi, Osaka 567-8680 (JP)**
- **MATSUDA Koso**
  **Ibaraki-shi, Osaka 567-8680 (JP)**
- **SUZUKI Satoru**
  **Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(54) **FIBER, FIBER SHEET, METHOD FOR PRODUCING FIBER, AND ACIDIC GAS ADSORPTION DEVICE**

(57)   The present invention provides a novel fiber suitable for an adsorbent for acidic gas. The fiber of the present invention includes a polymer having an amino group. With respect to the fiber, an adsorption amount of carbon dioxide when the fiber is caused to be in contact with mixed gas composed of carbon dioxide, nitrogen, and water vapor for 15 hours is 0.1 mmol/g or more, for example. Here, the carbon dioxide in the mixed gas has a concentration of 400 vol ppm, and the mixed gas has a temperature of 23°C and a humidity of 50%RH.

FIG.1

**Description**

TECHNICAL FIELD

The present invention relates to a fiber, a fiber sheet, a production method for the fiber, and an acidic gas adsorption device.

BACKGROUND ART

In recent years, in order to reduce the amount of carbon dioxide in atmospheric air, carbon capture and storage (CCS) and carbon capture and utilization (CCU) have been considered. In CCS and CCU, in some cases, capture of carbon dioxide is performed by separating carbon dioxide from atmospheric air.

As a method for separating acidic gas such as carbon dioxide from atmospheric air, an adsorption method in which acidic gas is caused to be adsorbed by an adsorbent to be separated has been developed. The adsorbent utilized in the adsorption method can adsorb acidic gas by coming into contact with atmospheric air, for example.

As the adsorbent, from the viewpoint of having a large specific surface area and high adsorption performance, a fiber, in particular, a nanofiber, is preferable. The nanofiber also has an advantage of being able to suppress, due to the slip flow effect, pressure loss of a fluid in contact with the nanofiber. Further, in the nanofiber, molecules forming the material of the nanofiber are regularly arrayed, and thus, with respect to the nanofiber, there is also a tendency that high mechanical characteristics and heat resistance are obtained. For example, Patent Literature 1 discloses utilization of a nanofiber as an adsorbent for carbon dioxide.

CITATION LIST

Patent Literature

Patent Literature 1: JP2016-17236A

SUMMARY OF INVENTION

Technical Problem

A novel fiber suitable for an adsorbent for acidic gas is desired.

Solution to Problem

The present invention provides
a fiber including a polymer having an amino group.
Further, the present invention provides
a fiber sheet including the above fiber.
Further, the present invention provides
a production method for a fiber, the method including:

discharging, from a discharge part, a raw material having a compound group including at least one selected from the group consisting of a monomer and a prepolymer, to send a discharge substance to a collection part; and
applying, in a space between the discharge part and the collection part, energy to the compound group included in the discharge substance, to cause the compound group to react, thereby forming a polymer.

Further, the present invention provides

an acidic gas adsorption device including an adsorption part having a gas inlet and a gas outlet, wherein the adsorption part contains the fiber above.

Advantageous Effects of Invention

According to the present invention, a novel fiber suitable for an adsorbent for acidic gas can be provided.

## BRIEF DESCRIPTION OF THE DRAWINGS

FIG. 1 is a diagram for describing a production method according to an embodiment of the present invention.
FIG. 2 is a diagram for describing a measurement method for an adsorption amount of carbon dioxide by a fiber.
FIG. 3A is a perspective view schematically showing an example of a structure including a fiber sheet.
FIG. 3B is a perspective view schematically showing a modification of a structure including a fiber sheet.
FIG. 4A is a scanning electron microscope (SEM) image showing a result of observation at a magnification of 3000 times of a fiber of Example 1.
FIG. 4B is an SEM image showing a result of observation at a magnification of 10000 times of the fiber of Example 1.
FIG. 5A is an SEM image showing a result of observation at a magnification of 3000 times of a fiber of Example 2.
FIG. 5B is an SEM image showing a result of observation at a magnification of 10000 times of the fiber of Example 2.
FIG. 6A is an SEM image showing a result of observation at a magnification of 3000 times of a fiber of Example 3.
FIG. 6B is an SEM image showing a result of observation at a magnification of 10000 times of the fiber of Example 3.
FIG. 7A is an SEM image showing a result of observation at a magnification of 3000 times of a fiber of Example 4.
FIG. 7B is an SEM image showing a result of observation at a magnification of 10000 times of the fiber of Example 4.
FIG. 8A is an SEM image showing a result of observation at a magnification of 3000 times of a fiber of Example 5.
FIG. 8B is an SEM image showing a result of observation at a magnification of 10000 times of the fiber of Example 5.
FIG. 9A is an SEM image showing a result of observation at a magnification of 3000 times of a fiber of Example 6.
FIG. 9B is an SEM image showing a result of observation at a magnification of 10000 times of the fiber of Example 6.
FIG. 10A is an SEM image showing a result of observation at a magnification of 3000 times of a fiber of Example 7.
FIG. 10B is an SEM image showing a result of observation at a magnification of 10000 times of the fiber of Example 7.
FIG. 11 is an SEM image showing a result of observation at a magnification of 10000 times of a fiber of Example 11.
FIG. 12 is an SEM image showing a result of observation at a magnification of 10000 times of a fiber of Example 15.
FIG. 13 is an SEM image showing a result of observation at a magnification of 10000 times of a fiber of Example 16.
FIG. 14 is an SEM image showing a result of observation at a magnification of 10000 times of a fiber of Example 17.
FIG. 15A is an SEM image showing a result of observation at a magnification of 2000 times of a film obtained in Comparative Example 2.
FIG. 15B is an SEM image showing a result of observation at a magnification of 10000 times of the film obtained in Comparative Example 2.
FIG. 16 is an SEM image showing a result of observation at a magnification of 2000 times of a film obtained in Comparative Example 3.
FIG. 17 is an SEM image showing a result of observation at a magnification of 3000 times of a film obtained in Comparative Example 4.
FIG. 18 is an SEM image showing a result of observation at a magnification of 3000 times of a film obtained in Comparative Example 5.

## DESCRIPTION OF EMBODIMENTS

Hereinafter, details of the present invention will be described, but the following description is not intended to limit the present invention to specific embodiments.

<Embodiment of fiber>

A fiber F of the present embodiment includes a polymer P having an amino group. Preferably, the fiber F is a nanofiber having an average fiber diameter of 1 to 1000 nm.

The polymer P has a function of adsorbing acidic gas due to the amino group. The polymer P includes, as the amino group, at least one selected from the group consisting of a primary amino group, a secondary amino group, and a tertiary amino group, for example. From the viewpoint of the acidic gas adsorption ability, the polymer P preferably includes at least one selected from the group consisting of a primary amino group and a secondary amino group, and particularly preferably includes a secondary amino group. In other words, the amino group of the polymer P preferably includes a secondary amino group. The polymer P having a secondary amino group also has a tendency of easily desorbing the adsorbed acidic gas. That is, in the case of the polymer P having a secondary amino group, a regeneration process of the fiber F can be performed under a relatively mild condition. The present invention provides, in another aspect thereof, the fiber F including the polymer P having a secondary amino group. The polymer P may include a tertiary amino group, but need not necessarily include a tertiary amino group.

The content of the amino group in the polymer P, in particular, the primary amino group or the secondary amino group, is, for example, 10 wt% or more and preferably 30 wt% or more. The higher this content is, the more the acidic gas adsorption ability in the fiber F tends to be improved. The upper limit value of the content of the amino group in the polymer P is not limited in particular, and is 80 wt%, for example.

The polymer P may include another functional group other than the amino group. Examples of the other functional group include a hydroxyl group, an ether group, an ester group, an amide group, and the like, and a hydroxyl group is preferable. The polymer P may be composed of only the hydrocarbon group, the amino group, and the hydroxyl group.

The polymer P is not limited in particular as long as the polymer P has an amino group, and examples of the polymer P include an amine polymer including a constitutional unit derived from an epoxy monomer. This amine polymer includes at least one selected from the group consisting of: a reaction product P1 of a compound group including an amine monomer and an epoxy monomer; and a reaction product P2 of a compound group including an amine prepolymer and an epoxy monomer, for example. Other examples of the polymer P include: a reaction product P3 of a compound group including an amine monomer and an epoxy prepolymer; a polymer P4 including a constitutional unit derived from aziridines; a polymer P5 including a constitutional unit derived from an amino group-containing (meth)acrylate, and the like. In the present description, "(meth)acrylate" means acrylate and/or methacrylate. From the viewpoint of thermal stability or the like, the polymer P preferably includes at least one of the reaction products P1 to P3 and more preferably includes the reaction product P1.

As described above, the compound group for forming the reaction product P1 includes an amine monomer and an epoxy monomer. The reaction product P1 is, for example, a polymer of monomers including an amine monomer and an epoxy monomer, and preferably is a polymer of an amine monomer and an epoxy monomer in particular.

The amine monomer is a monomer including at least one amino group, and, for example, includes at least one primary amino group. The number of the primary amino groups included in the amine monomer is preferably two or more, may be three or more, or may be four or more. The upper limit value of the number of the primary amino groups is not limited in particular, and is ten, for example. The amine monomer may include a secondary amino group and a tertiary amino group, in addition to the primary amino group. The molecular weight of the amine monomer is not limited in particular, and is, for example, less than 1000 and preferably 500 or less.

Examples of the amine monomer include: aliphatic amines such as ethylamine, ethylenediamine, 1,4-butylenediamine, 1,5-pentanediamine, 1,6-hexanediamine, 1,7-heptanediamine, 1,8-octanediamine, diethylenetriamine, triethylenetetramine, tetraethylenepentamine, imino-bis-propylamine, bis(hexamethylene)triamine, 1,3,6-trisaminomethylhexane, tris(2-aminoethyl)amine, N,N'-bis(3-aminopropyl)ethylenediamine, polymethylenediamine, trimethylhexamethylenediamine, and polyetherdiamine; alicyclic amines such as isophoronediamine, menthanediamine, piperazine, N-aminoethylpiperazine, 3,9-bis(3-aminopropyl)-2,4,8,10-tetraoxaspiro(5,5)undecane adduct, bis(4-amino-3-methylcyclohexyl)methane, and bis(4-aminocyclohexyl)methane, and modified products of these; and the like. The amine monomer preferably includes an aliphatic amine, in particular, triethylenetetramine (TETA). The amine monomer can be used alone, or two types or more thereof may be used in combination.

The epoxy monomer includes at least one epoxy group, for example. The number of the epoxy groups included in the epoxy monomer is preferably two or more, may be three or more, or may be four or more. The upper limit value of the number of the epoxy groups included in the epoxy monomer is not limited in particular, and is ten, for example. The molecular weight of the epoxy monomer is not limited in particular, and is, for example, less than 1000 and preferably 500 or less.

Examples of the epoxy monomer include: monofunctional epoxy compounds such as n-butyl glycidyl ether, higher alcohol glycidyl ether, allyl glycidyl ether, 2-ethylhexyl glycidyl ether, phenyl glycidyl ether, cresyl glycidyl ether, p-sec-butylphenyl glycidyl ether, and t-butylphenyl glycidyl ether; diepoxy alkanes such as 1,5-hexadiene diepoxide, 1,7-octadiene diepoxide, and 1,9-decadiene diepoxide; ether group-containing polyfunctional epoxy compounds such as (poly)ethylene glycol diglycidyl ether, (poly)propylene glycol diglycidyl ether, 1,4-butanediol diglycidyl ether, neopentyl glycol diglycidyl ether, 1,6-hexanediol diglycidyl ether, trimethylolpropane polyglycidyl ether, pentaerythritol tetraglycidyl ether, glycerol polyglycidyl ether, and sorbitol polyglycidyl ether; and amino group-containing polyfunctional epoxy compounds such as N,N,N',N'-tetraglycidyl-m-xylenediamine and 1,3-bis(N,N-diglycidylaminomethyl)cyclohexane. The epoxy monomer can be used alone, or two types or more thereof may be used in combination.

The epoxy monomer preferably includes at least one selected from the group consisting of a diepoxy alkane and an amino group-containing polyfunctional epoxy compound, and more preferably includes a diepoxy alkane. As an example, as the epoxy monomer, 1,7-octadiene diepoxide (ODE) and 1,3-bis(N,N-diglycidylaminomethyl)cyclohexane may be used in combination. The epoxy monomer may include an ether group-containing polyfunctional epoxy compound such as ethylene glycol diglycidyl ether (EDE), pentaerythritol tetraglycidyl ether (PETG), glycerol polyglycidyl ether, or sorbitol polyglycidyl ether. When a monofunctional epoxy compound is used, the monofunctional epoxy compound is preferably used in combination with another epoxy monomer including two or more epoxy groups. The monofunctional epoxy compound can also be utilized as a reactive diluent for adjusting the viscosity of the raw material of the fiber F.

The reaction product P1 includes a constitutional unit U1 derived from the amine monomer, and a constitutional unit U2 derived from the epoxy monomer, for example. The content of the constitutional unit U1 in the reaction product P1 is, for example, 30 wt% or more and preferably 50 wt% or more. The upper limit value of the content of the constitutional unit U1 in the reaction product P1 is not limited in particular, and is 80 wt%, for example. The content of the constitutional unit U2 in the reaction product P1 is 20 wt% to 70 wt%, for example.

The compound group for forming the reaction product P2 includes an amine prepolymer and an epoxy monomer, as described above. The reaction product P2 is a matter (crosslinked product) obtained by the amine prepolymer being crosslinked by the epoxy monomer, for example.

The amine prepolymer for forming the reaction product P2 includes at least one amino group, in particular, a primary amino group, for example. The number of the primary amino groups included in the amine prepolymer is preferably two or more, may be three or more, or may be four or more. The upper limit value of the number of the primary amino groups is not limited in particular, and is 100, for example. The amine prepolymer may include a secondary amino group and a tertiary amino group, in addition to the primary amino group. The weight average molecular weight of the amine prepolymer is not limited in particular, and is, for example, 200 or more, or may be 300 or more, 500 or more, 1000 or more, or further, 1500 or more. The upper limit value of the weight average molecular weight of the amine prepolymer is not limited in particular, and is 5000, for example.

Examples of the amine prepolymer include: aliphatic polyamines such as polyethyleneimine and polyalkylene polyamine; (meth)acrylic polymers having an amino group such as aminoethylated acrylic polymer; aliphatic polyamideamines formed through reaction between polyamines and a dimer acid; and the like. Preferably, the amine prepolymer includes an aliphatic polyamine, in particular, polyethyleneimine (PEI). The amine prepolymer can be used alone, or two types or more thereof can be used in combination.

Examples of the epoxy monomer for forming the reaction product P2 include those described above with respect to the reaction product P1.

The reaction product P2 includes the constitutional unit U2 derived from the epoxy monomer, for example. The content of the constitutional unit U2 in the reaction product P2 is 20 wt% to 70 wt%, for example.

The compound group for forming the reaction product P3 includes an amine monomer and an epoxy prepolymer, as described above. The reaction product P3 is a matter (crosslinked product) obtained by the epoxy prepolymer being crosslinked by the amine monomer, for example.

Examples of the amine monomer for forming the reaction product P3 include those described above with respect to the reaction product P1.

The epoxy prepolymer includes at least one epoxy group, for example. The number of the epoxy groups included in the epoxy prepolymer is preferably two or more, may be three or more, or may be four or more. The upper limit value of the number of the epoxy groups included in the epoxy prepolymer is not limited in particular, and is 100, for example. The weight average molecular weight of the epoxy prepolymer is not limited in particular, and is 1000 to 50000, for example.

Examples of the epoxy prepolymer include an aromatic epoxy resin and a non-aromatic epoxy resin. Examples of the aromatic epoxy resin include a polyphenyl-based epoxy resin, an epoxy resin including a fluorene ring, an epoxy resin including triglycidyl isocyanurate, an epoxy resin including a hetero aromatic ring (e.g., triazine ring), and the like. Examples of the polyphenyl-based epoxy resin include bisphenol A type epoxy resin, brominated bisphenol A type epoxy resin, bisphenol F type epoxy resin, bisphenol AD type epoxy resin, stilbene type epoxy resin, biphenyl type epoxy resin, bisphenol A novolak type epoxy resin, cresol novolak type epoxy resin, diaminodiphenylmethane type epoxy resin, tetrakis(hydroxyphenyl)ethane-based epoxy resin, and the like. Examples of the non-aromatic epoxy resin include aliphatic glycidyl ether type epoxy resin, aliphatic glycidyl ester type epoxy resin, alicyclic glycidyl ether type epoxy resin, alicyclic glycidyl amine type epoxy resin, alicyclic glycidyl ester type epoxy resin, and the like. The epoxy prepolymer can be used alone, or two types or more thereof can be used in combination.

A glass transition temperature Tg of the polymer P, in particular, of the reaction products P1 to P3, is not limited in particular, and is, for example, 40°C or less, preferably 30°C or less, more preferably 20°C or less, and further preferably 10°C or less. When the glass transition temperature Tg of the polymer P is low to this extent, a regeneration process of the fiber F can be performed under a relatively mild condition, for example, with heat treatment at a low temperature. The lower limit value of the glass transition temperature Tg of the polymer P is preferably -100°C from the viewpoint of sufficiently ensuring the acidic gas adsorption ability in the fiber F. In the present description, the glass transition temperature Tg means the midpoint glass transition temperature ($T_{mg}$) obtained according to the standards of JIS K7121:1987. Normally, the reaction products P1 to P3 correspond to a thermosetting resin.

When the reaction products P1 to P3 are to be prepared, the blending ratio between the amine compound (the amine monomer or the amine prepolymer) and the epoxy compound (the epoxy monomer or the epoxy prepolymer) is preferably set such that the ratio of the equivalent of the epoxy group included in the epoxy compound relative to the equivalent of active hydrogen of the primary amino group included in the amine compound is, for example, 1 or less, preferably 0.9 or less, and more preferably 0.5 or less.

As described above, the polymer P4 includes a constitutional unit U3 derived from aziridines. The polymer P4 may include the constitutional unit U3 as a main component, or may be substantially composed of only the constitutional unit U3. In the present description, "main component" means a constitutional unit most included on a weight basis, out of all constitutional units forming the polymer.

Typically, the aziridines are ethyleneimine. A specific example of the polymer P4 is polyethyleneimine. The polymer P4 may be a linear polyethyleneimine or may be a branched polyethyleneimine.

As described above, the polymer P5 includes a constitutional unit U4 derived from an amino group-containing (meth)acrylate. The polymer P5 may include the constitutional unit U4 as a main component, or may be substantially composed of only the constitutional unit U4.

Examples of the amino group-containing (meth)acrylate include aminoalkyl(meth)acrylates such as aminoethyl(meth)acrylate, N-methylaminoethyl(meth)acrylate, and t-butylaminoethyl(meth)acrylate.

The weight average molecular weight of the polymer P is not limited in particular, and is, for example, 500 or more, preferably 1000 or more, more preferably 10000 or more, and further preferably 100000 or more. The upper limit value of the weight average molecular weight of the polymer P is 10000000, for example.

The content of the polymer P in the fiber F is, for example, 10 wt% or more, preferably 30 wt% or more, more preferably 40 wt% or more, and further preferably 50 wt% or more, may be 55 wt% or more, or may be 60 wt% or more. The higher the content of the polymer P is, the more the acidic gas adsorption ability in the fiber F tends to be improved. The upper limit value of the content of the polymer P is not limited in particular, and is, for example, 90 wt%, may be 80 wt%, or may be 70 wt%.

The fiber F may further include a thermoplastic resin T. The thermoplastic resin T has solubility in water, for example. In the present description, "the thermoplastic resin T has solubility" means that 1 g or more of the thermoplastic resin T is soluble in a mentioned solvent with respect to 100 g of the solvent under a condition of 95°C, and preferably means that 1 g or more of the thermoplastic resin T is soluble in the mentioned solvent with respect to 100 g of the solvent under a condition of 23°C. The thermoplastic resin T may have solubility in alcohol, in particular, lower alcohol.

Specific examples of the thermoplastic resin T include a polyvinyl alcohol resin, a polyvinylpyrrolidone resin, a polyurethane resin, a (meth)acrylic resin, a polyester resin, a polyether resin, and the like. The thermoplastic resin T can be used alone, or two types or more thereof can be used in combination. The thermoplastic resin T preferably includes at least one selected from the group consisting of a polyvinyl alcohol resin, a polyvinylpyrrolidone resin, and a polyether resin, and particularly preferably includes a polyvinyl alcohol resin. Specific examples of the polyether resin include polyethylene glycol, polyethylene oxide, and the like.

The weight average molecular weight of the thermoplastic resin T is not limited in particular, and is 1000 to 10000000, for example.

The content of the thermoplastic resin T in the fiber F is not limited in particular, and is, for example, 90 wt% or less, preferably 70 wt% or less, more preferably 60 wt% or less, and further preferably 50 wt% or less, may be 45 wt% or less, or may be 40 wt% or less. From the viewpoint of being able to easily prepare the fiber F, the lower limit value of the content of the thermoplastic resin T is, for example, 10 wt%, may be 20 wt%, or may be 30 wt%.

In the fiber F, from the viewpoint of improving the acidic gas adsorption ability of the fiber F, the ratio of the weight of the polymer P relative to the total value of the weight of the polymer P and the weight of the thermoplastic resin T is, for example, 5 wt% or more, preferably 10 wt% or more, more preferably 30 wt% or more, further preferably 40 wt% or more, and particularly preferably 50 wt% or more, may be 55 wt% or more, or may be 60 wt% or more. The upper limit value of this ratio is not limited in particular, and is, for example, 90 wt%, may be 80 wt%, or may be 70 wt%.

The fiber F may be substantially composed of only the polymer P and the thermoplastic resin T, and may further include another component other than the polymer P and the thermoplastic resin T. Examples of the other component include a reaction accelerator, a plasticizer, a filler, a pigment, a dye, an anti-aging agent, a conductive material, an antistatic agent, an ultraviolet absorber, a flame retardant, an antioxidant, a surfactant, and the like. The reaction accelerator is utilized when the polymer P is synthesized, for example. Examples of the reaction accelerator include: tertiary amines such as triethylamine and tributylamine; and imidazoles such as 2-phenol-4-methylimidazole, 2-ethyl-4-methylimidazole, and 2-phenol-4,5-dihydroxyimidazole. These reaction accelerators can accelerate reaction for synthesizing a polymer of an amine monomer and an epoxy monomer, for example. Examples of the plasticizer include a polyethylene glycol having a low molecular weight (e.g., the weight average molecular weight being less than 1000), and the like. When the fiber F includes a plasticizer, diffusibility of acidic gas inside the polymer P tends to be improved due to plasticization of the polymer P. Due to improvement of the diffusibility of acidic gas inside the polymer P, the acidic gas adsorption speed by the fiber F and the desorption speed of acidic gas from the fiber F tend to be improved.

A density d of nitrogen element in the fiber F is not limited in particular, and is, for example, 1 mmol/g or more, preferably 3 mmol/g or more, more preferably 5 mmol/g or more, and further preferably 7 mmol/g or more. The upper limit value of the density d of nitrogen element is not limited in particular, and is, for example, 50 mmol/g, and may be 20 mmol/g. When all nitrogen element included in the fiber F is derived from the amino group, the density d of nitrogen element can be regarded as the density of the amino group in the fiber F. The present invention provides, in another aspect thereof, the fiber F in which the density of the amino group is 1 mmol/g or more.

The density d of nitrogen element can be measured according to the following method. First, a weight ratio w (wt%) of nitrogen element included in the fiber F is measured by using a commercially-available CHN elemental analyzer.

On the basis of the obtained result, the density d of nitrogen element can be calculated from formula (1) below.

$$\text{Density } d \text{ (mmol/g)} = (\text{weight ratio } w \text{ (wt\%)} \times 1000)/(\text{atomic weight of nitrogen} \times 100) \quad (1)$$

A weight ratio w (N ratio) of nitrogen element included in the fiber F is not limited in particular, and is, for example, 5 wt% or more, 7 wt% or more, 9 wt% or more, 10 wt% or more, 11 wt% or more, 12 wt% or more, 13 wt% or more, 14 wt% or more, and further, 15 wt% or more. The upper limit value of the weight ratio w is, for example, 50 wt%, and may be 30 wt%.

Further, the ratio of the amount of substance of nitrogen element included in the fiber F relative to the amount of substance of all elements forming the fiber F is not limited in particular, and is, for example, 1 mol% or more, preferably 5 mol% or more, more preferably 7 mol% or more, may be 8 mol% or more, may be 9 mol% or more, or may be 10 mol% or more. The upper limit value of this ratio is not limited in particular, and is 30 mol%, for example. The amount of substance of each element forming the fiber F can be measured by performing element mapping on a cross section of the fiber F. The element mapping can be performed by observing a cross section of the fiber F by a transmission electron microscope and performing energy dispersive X-ray analysis (EDX).

(Production method for fiber)

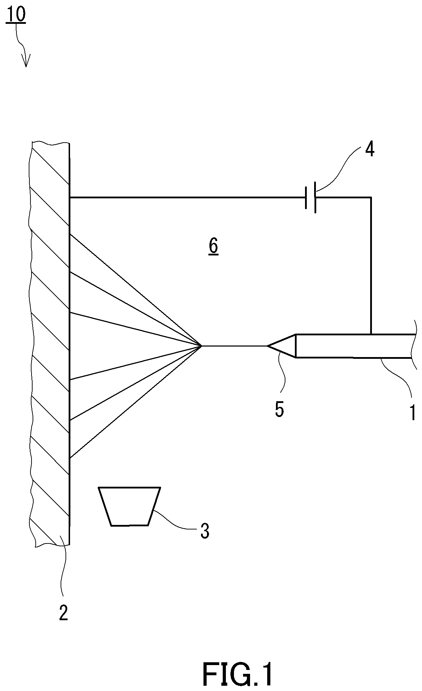

Next, a production method for the fiber F will be described. The fiber F can be prepared by using a production device 10 shown in FIG. 1, for example. The production device 10 includes a discharge part 1 and a collection part 2. The discharge part 1 is separated from the collection part 2 with a space 6 therebetween, and can discharge a raw material M of the fiber F toward the collection part 2, for example. In other words, the discharge part 1 can discharge a discharge substance 5 including the raw material M toward the collection part 2. The discharge part 1 faces the collection part 2, for example. In FIG. 1, the discharge part 1 and the collection part 2 are arranged in the lateral direction. However, the discharge part 1 and the collection part 2 may be arranged in the vertical direction. For example, the discharge part 1 may be positioned above the collection part 2, or may be positioned below the collection part 2. The distance between the discharge part 1 and the collection part 2 is not limited in particular, and is 5 cm to 15 cm, for example. A specific example of the discharge part 1 is a nozzle. The discharge part 1 may be a syringe. The collection part 2 collects the fiber F formed in the space 6. The collection part 2 may be a plate-shaped member, but preferably is a wind-up roll that can wind up the fiber F from the viewpoint of mass productivity. Materials of the discharge part 1 and the collection part 2 are not limited in particular, and examples thereof include conductive materials such as metal.

The production device 10 may further include a heating part 3 and a power supply 4. In the space 6, in particular, the space 6 in the vicinity of the collection part 2, the heating part 3 can heat the discharge substance 5 discharged from the discharge part 1. Preferably, the heating part 3 is a noncontact-type heater such as a dryer, a heat gun, or a lamp heater. Instead of the heating part 3, or in addition to the heating part 3, the production device 10 may include a light emitting element (not shown) that emits light such as ultraviolet light.

The power supply 4 is electrically connected to each of the discharge part 1 and the collection part 2, and can apply voltage to the discharge part 1 and the collection part 2. The discharge part 1 is configured such that, upon application of voltage to the discharge part 1, voltage is applied also to the raw material M contained in the discharge part 1. Examples of the power supply 4 include an AC-DC converter, a power generation device, a battery, and the like.

The production device 10 including the power supply 4 is suitable for an electrospinning method. However, in the production device 10, another spinning method other than the electrospinning method may be performed. Examples of the other spinning method include a dry spinning method in which high temperature air is blown to the discharge substance 5 discharged from the discharge part 1 and the Zetta-Spinning method.

A production method for the fiber F of the present embodiment includes: discharging, from the discharge part 1, the raw material M having a compound group including at least one selected from the group consisting of a monomer and a prepolymer, to send the discharge substance 5 to the collection part 2; and applying, in the space 6 between the discharge part 1 and the collection part 2, energy to the compound group included in the discharge substance 5, to cause the compound group to react, thereby forming a polymer.

The compound group includes a compound for forming the polymer P described above. Preferably, the compound group includes an amine monomer or an epoxy monomer as the monomer. The compound group may include an amine prepolymer or an epoxy prepolymer as the prepolymer. As an example, the compound group includes at least one selected from the group consisting of an amine monomer and an amine prepolymer, and may further include an epoxy monomer.

The raw material M further includes the thermoplastic resin T described above, for example. With the thermoplastic resin T, the viscosity of the raw material M can be appropriately adjusted, and thus, there is a tendency that the fiber F can be easily prepared. Further, since the thermoplastic resin T easily becomes charged, the electrospinning method is easy to be applied to the raw material M including the thermoplastic resin T. A polyvinyl alcohol resin as the thermoplastic resin T has high compatibility with the polymer P, in particular, the above reaction products P1 to P3, and is suitable for the production method of the present embodiment.

The raw material M may further include a solvent. Examples of the solvent include water, alcohol, in particular, lower alcohol, and the like. Preferably, the raw material M includes water as the solvent.

The raw material M may further include another component other than the compound group, the thermoplastic resin T, and the solvent. Examples of the other component include the above-described reaction accelerator, a polymerization initiator, a plasticizer, a filler, and the like.

The solid component concentration in the raw material M is not limited in particular, and is, for example, 50 wt% or less, preferably 30 wt% or less, and more preferably 20 wt% or less. The lower the solid component concentration in the raw material M is, the more the average fiber diameter of the fiber F tends to be decreased. The lower limit value of the solid component concentration in the raw material M is not limited in particular, and is, for example, 3 wt%, or may be 5 wt%.

In the production method of the present embodiment, for example, in a state where voltage is applied to the raw material M, the raw material M is discharged from the discharge part 1. The application of voltage to the raw material M can be performed by applying voltage to the discharge part 1 by the power supply 4. The magnitude of the voltage that is applied to the raw material M is not limited in particular, and is 5 to 20 kV, for example. Upon application of the voltage to the raw material M, a Taylor cone having a cone shape and composed of the discharge substance 5 is formed near the outlet for the raw material M in the discharge part 1. Normally, the composition of the discharge substance 5 forming the Taylor cone is the same as the composition of the raw material M. From the tip of the Taylor cone, a linear body composed of the discharge substance 5 is released toward the space 6.

In the production method of the present embodiment, in the space 6, energy is applied to the compound group included in the discharge substance 5 as the linear body, to cause the compound group to react. Preferably, the energy that is applied to the compound group is thermal energy. However, the energy that is applied to the compound group may be light energy.

As an example, in the space 6, thermal energy can be applied to the compound group by heating the discharge substance 5. For example, the compound group can be caused to react by heating the discharge substance at a temperature of 70°C to 200°C. When the heating temperature of the discharge substance 5 exceeds the melting point of the thermoplastic resin T, the average fiber diameter of the fiber F tends to be increased. Therefore, the heating temperature of the discharge substance 5 is preferably 200°C or less and more preferably 180°C or less, may be 160°C or less, or may be 140°C or less. The heating temperature of the discharge substance 5 may be 100°C or more. Heating of the discharge substance 5 can be performed by the heating part 3.

Upon application of energy to the compound group, reaction of the compound group proceeds. Typically, the reaction of the compound group is polymerization reaction of the monomer. However, the reaction of the compound group may be a crosslinking reaction of the prepolymer. In the production method of the present embodiment, in the space 6, the reaction of the compound group proceeds, whereby the polymer P is formed. Accordingly, in the space 6, the fiber F is obtained. The fiber F moves from the space 6 to the collection part 2 to be collected on the collection part 2. Due to accumulation of the fiber F on the collection part 2, a nonwoven fabric may be formed. That is, the present invention provides, in another aspect thereof, a nonwoven fabric including the fiber F.

In general, it is difficult to apply a spinning method such as the electrospinning method to a thermosetting resin that is poor in solubility in a solvent and that does not undergo thermofusion. However, in the production method of the present embodiment, the compound group reacts in the space 6 between the discharge part 1 and the collection part 2, whereby the polymer P is formed. Therefore, with the production method of the present embodiment, irrespective of the type of the polymer P, the fiber F can be easily prepared.

The production method for the fiber F is not limited to that described above. As an example, the fiber F having the polymer P4 including a constitutional unit derived from aziridines can be prepared by the method described above, by using the raw material M including the polymer P4 instead of the monomer and the prepolymer. With this method, in the space 6 between the discharge part 1 and the collection part 2, the reaction of the compound group (the polymer P4) does not proceed. Therefore, in the space 6, energy need not necessarily be applied to the discharge substance 5.

(Adsorption amount of carbon dioxide by fiber)

The fiber F has a tendency that the adsorption ability with respect to acidic gas such as carbon dioxide is high. As an example, an adsorption amount $A1$ of carbon dioxide when the fiber F is caused to be in contact with mixed gas G composed of carbon dioxide, nitrogen, and water vapor for 15 hours is 0.1 mmol/g or more. The adsorption amount $A1$ of carbon dioxide is preferably 0.3 mmol/g or more, 0.5 mmol/g or more, 0.7 mmol/g or more, 0.8 mmol/g or more, 0.9 mmol/g or more, 1.0 mmol/g or more, 1.1 mmol/g or more, 1.2 mmol/g or more, 1.3 mmol/g or more, 1.4 mmol/g or more, 1.5 mmol/g or more, 1.6 mmol/g or more, 1.7 mmol/g or more, 1.8 mmol/g or more, 1.9 mmol/g or more, 2.0 mmol/g or more, 2.1 mmol/g or more, 2.2 mmol/g or more, and further 2.3 mmol/g or more. The upper limit value of the adsorption amount A1 of carbon dioxide is not limited in particular, and is 10 mmol/g, for example.

Further, the fiber F of the present embodiment has a tendency that the adsorption speed with respect to acidic gas such as carbon dioxide is large. The adsorption speed of the fiber F can be evaluated by a ratio R of an adsorption amount A2 (mmol/g) of carbon dioxide when the fiber F is caused to be in contact with the mixed gas G for 60 minutes, relative to the above adsorption amount A1 (mmol/g). The ratio R is, for example, 20% or more, or may be 30% or more, 40% or more, 50% or more, 60% or more, 70% or more, or further, 80% or more. The upper limit value of the ratio R is not limited in particular, and is, for example, 100%, and may be 80% depending on the case.

The adsorption amount A2 of carbon dioxide is, for example, 0.05 mmol/g or more, preferably 0.1 mmol/g or more, more preferably 0.2 mmol/g or more, further preferably 0.3 mmol/g or more, and particularly preferably 0.4 mmol/g or more, may be 0.5 mmol/g or more, may be 0.6 mmol/g or more, or may be 0.7 mmol/g or more. The upper limit value of the adsorption amount A2 of carbon dioxide is not limited in particular, and is 5 mmol/g, for example.

[Method for measuring adsorption amount of carbon dioxide]

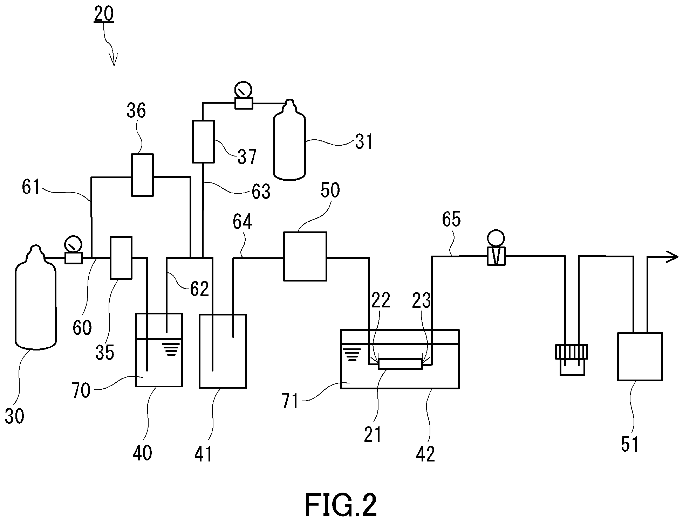

In the following, a method for measuring the adsorption amounts A1 and A2 of carbon dioxide will be described. The adsorption amounts A1 and A2 can be measured by using a measurement device 20 shown in FIG. 2, for example. The measurement device 20 includes a first tank 30 and a second tank 31. As an example, the first tank 30 stores dry-state nitrogen, and the second tank 31 stores mixed gas of dry-state nitrogen and dry-state carbon dioxide. The concentration of carbon dioxide in the mixed gas in the second tank 31 is 5 vol%, for example.

The measurement device 20 further includes a first container 40 containing water 70, and a first path 60 for sending nitrogen from the first tank 30 to the first container 40. The first path 60 has one end connected to a gas outlet of the first tank 30, and the other end disposed in the water 70 in the first container 40. Nitrogen sent from the first tank 30 to the first container 40 is humidified by coming into contact with the water 70. In the first path 60, a massflow controller 35 for adjusting the flow rate of nitrogen that is sent from the first tank 30 to the first container 40 is disposed.

The measurement device 20 further includes a second container 41, a second path 62, and a bypass path 61. The second path 62 connects the first container 40 and the second container 41 to each other. Nitrogen sent to the first container 40 and humidified is sent through the second path 62 to the second container 41. The bypass path 61 is branched from the first path 60 at a position between the first tank 30 and the massflow controller 35 and is connected to the second path 62. A part of the nitrogen sent from the first tank 30 flows into the bypass path 61 and is sent to the second container 41 through the second path 62. In the bypass path 61, a massflow controller 36 for adjusting the flow rate of nitrogen that is sent from the first tank 30 to the bypass path 61 is disposed.

The measurement device 20 further includes a third path 63 for sending the mixed gas from the second tank 31 to the second path 62. The third path 63 has one end connected to a gas outlet of the second tank 31 and the other end connected to the second path 62. In the third path 63, a massflow controller 37 for adjusting the flow rate of the mixed gas that is sent from the second tank 31 to the second path 62 is disposed. The mixed gas sent to the second path 62 is sent through the second path 62 to the second container 41.

The measurement device 20 further includes a third container 42 and a fourth path 64. The third container 42 contains water 71 and an adsorption part 21 disposed in the water 71. In the third container 42, the temperature of the water 71 is maintained at 23°C. The adsorption part 21 has a gas inlet 22 and a gas outlet 23. The adsorption part 21 functions as a container containing the fiber F therein. The adsorption part 21 is configured such that the water 71 does not permeate therein. Typically, the adsorption part 21 is a tube composed of a hydrophobic resin, e.g., a fluorine resin such as tetrafluoroethylene-perfluoroalkoxyethylene copolymer (PFA). As an example, the tube as the adsorption part 21 has an inner diameter of 4 mm and an outer diameter of 6 mm. The adsorption part 21 is configured to be attachable to/detachable from the measurement device 20.

The measurement device 20 can also be used as an acidic gas adsorption device including the adsorption part 21. The present invention provides, in another aspect thereof, an acidic gas adsorption device 20 including the adsorption part 21 having the gas inlet 22 and the gas outlet 23, wherein the adsorption part 21 contains the fiber F.

The fourth path 64 connects the second container 41 and the third container 42 to each other. Specifically, the fourth path 64 is connected to the gas inlet 22 of the adsorption part 21 in the third container 42. In the fourth path 64, a first concentration meter 50 for measuring the concentration of carbon dioxide in the gas that is supplied to the adsorption part 21 is disposed.

The measurement device 20 further includes a fifth path 65 connected to the gas outlet 23 of the adsorption part 21 and for discharging gas from the adsorption part 21 to the outside of the measurement device 20. In the fifth path 65, a second concentration meter 51 for measuring the concentration of carbon dioxide in the gas that is discharged from the adsorption part 21 is disposed. In the fifth path 65, a back pressure valve for adjusting the pressure in the adsorption part 21 to a constant value may be further disposed.

Each path of the measurement device 20 is composed of a metal-made or resinmade pipe, for example.

[Pretreatment]

In the method for measuring the adsorption amounts A1 and A2, first, a drying process is performed with respect to the fiber F. The drying process is performed by processing the fiber F for two hours or more under a condition of 60°C, in a vacuum atmosphere, for example. Next, in a dry room having a dew point of about -60°C, the adsorption part 21 is filled with the fiber F having been subjected to the drying process. The weight of the fiber F with which the adsorption part 21 is filled is 50 mg, for example. Next, the fourth path 64 and the fifth path 65 are connected to both ends of the adsorption part 21, and the adsorption part 21 is immersed in the water 71 in the third container 42.

Next, nitrogen from the first tank 30 and the mixed gas from the second tank 31 are supplied to the second container 41 through the first path 60, the second path 62, the bypass path 61, and the third path 63 of the measurement device 20. In the second container 41, these gases are mixed, and the mixed gas G composed of carbon dioxide, nitrogen, and water vapor is obtained. In the second container 41, the concentration of carbon dioxide in the mixed gas G is adjusted to 400 vol ppm. The mixed gas G has a temperature of 23°C and a humidity of 50%RH. The mixed gas G is supplied through the fourth path 64 to the adsorption part 21, at a sufficient flow rate with respect to the weight of the fiber F, e.g., at a flow rate of 300 mL/min with respect to 50 mg of the fiber F. In the adsorption part 21, the pressure of the mixed gas G is adjusted by the back pressure valve, to 107 kPa, for example.

Next, in a state where the mixed gas G is supplied to the adsorption part 21, the adsorption part 21 is taken out of the third container 42, and the adsorption part 21 is immersed in a hot water bath (not shown) at 80°C for two hours or more. Immersion of the adsorption part 21 in the hot water bath is performed until the concentration of carbon dioxide measured by the first concentration meter 50 and the concentration of carbon dioxide measured by the second concentration meter 51 have substantially the same value. Accordingly, with respect to the fiber F in the adsorption part 21, the pretreatment is completed.

[Adsorption test]

Next, in a state where the mixed gas G is supplied to the adsorption part 21, the adsorption part 21 is taken out of the hot water bath and is immersed in a water bath (the water 71) at 23°C of the third container 42. Accordingly, an adsorption test is started with respect to the fiber F in the adsorption part 21. The adsorption test is performed until 15 hours elapses from the start. When the adsorption test is performed for 15 hours, adsorption of carbon dioxide by the fiber F can, normally, be regarded as having reached equilibrium.

In the adsorption test, an amount of substance M1 of carbon dioxide adsorbed by the fiber F until 15 hours from the start, and an amount of substance M2 of carbon dioxide adsorbed by the fiber F until 60 minutes from the start are measured. The amount of substance of carbon dioxide adsorbed by the fiber F can be calculated from a result of measuring, over time, the difference between the concentration of carbon dioxide measured by the first concentration meter 50 and the concentration of carbon dioxide measured by the second concentration meter 51. On the basis of the amount of substance M1, the amount of substance of carbon dioxide adsorbed by 1 g of the fiber F in 15 hours is calculated, and the obtained calculated value is identified as the adsorption amount A1. Further, on the basis of the amount of substance M2, the amount of substance of carbon dioxide adsorbed by 1 g of the fiber F in 60 minutes is calculated, and the obtained calculated value is identified as the adsorption amount A2.

(Structure and physical property of fiber)

The fiber F is composed of only a body part including the polymer P, for example. In other words, the fiber F does not include a cover layer covering the surface of the body part. The polymer P is present uniformly in the fiber F, for example.

The structure of the fiber F is not limited in particular. The fiber F may be a short fiber or may be a long fiber. The fiber F may have a branched structure or need not necessarily have a branched structure.

As described above, preferably, the average fiber diameter of the fiber F is 1 to 1000 nm. The average fiber diameter of the fiber F is preferably 700 nm or less, more preferably 600 nm or less, and further preferably 500 nm or less, may be 450 nm or less, may be 400 nm or less, may be 300 nm or less, may be 250 nm or less, may be 200 nm or less, or may be 150 nm or less. The smaller the average fiber diameter of the fiber F is, the more the acidic gas adsorption speed in the fiber F tends to be improved.

The average fiber diameter of the fiber F can be identified by the following method. First, a plurality of the fibers F are observed by a scanning electron microscope. In the obtained electron microscopy image, fiber diameters of at least 15 fibers F are calculated by image processing. The average value of the obtained calculated values can be regarded as the average fiber diameter of the fiber F.

When the polymer P includes at least one of the reaction products P1 to P3, heat resistance of the fiber F tends to be improved.

(Usage of fiber)

The fiber F of the present embodiment is suitable for an adsorbent for acidic gas. Examples of the acidic gas include carbon dioxide, hydrogen sulfide, carbonyl sulfide, sulfur oxide (SOx), hydrogen cyanide, and nitrogen oxide (NOx), and preferably, the acidic gas is carbon dioxide. However, usage of the fiber F is not limited to the usage as an adsorbent for acidic gas.

The fiber F can be used according to the following method, for example. First, mixed gas including acidic gas is brought into contact with the fiber F. The mixed gas includes another gas other than acidic gas, for example. Examples of the other gas include nonpolar gas such as hydrogen or nitrogen, and inert gas such as helium, and preferably, the other gas is nitrogen. Typically, the mixed gas is atmospheric air. The mixed gas may be off-gas from a chemical plant or thermal power generation.

The temperature of the mixed gas is room temperature (23°C), for example. The concentration of acidic gas in the mixed gas is not limited in particular, and in a standard state (0°C, 101 kPa), is, for example, 0.01 vol% (100 vol ppm) or more and preferably 0.04 vol% (400 vol ppm) or more, or may be 1.0 vol% or more. The upper limit value of the concentration of carbon dioxide in the mixed gas is not limited in particular, and in a standard state, is 10 vol%, for example. Typically, the pressure of the mixed gas is equal to that of atmospheric air in the use environment of the fiber F. However, the mixed gas that is brought into contact with the fiber F may be pressurized.

The fiber F having come into contact with the mixed gas adsorbs acidic gas included in the mixed gas. Operation of bringing the mixed gas into contact with the fiber F is performed until acidic gas adsorption by the fiber F reaches equilibrium, for example.

Next, a regeneration process is performed with respect to the fiber F having adsorbed acidic gas. The regeneration process can be performed by heating the fiber F, for example. The heating temperature of the fiber F is 50 to 80°C, for example. The fiber F may be heated in a reduced-pressure atmosphere or a vacuum atmosphere. Through the heating of the fiber F, acidic gas is desorbed from the fiber F. Accordingly, the fiber F is regenerated and the fiber F can be repeatedly used. The acidic gas, in particular, carbon dioxide, desorbed from the fiber F can be utilized as synthesis raw material for chemicals or dry ice. The adsorption operation of acidic gas by means of the fiber F and the regeneration process of the fiber F can be performed by using the measurement device 20 (acidic gas adsorption device) described above.

<Embodiment of fiber sheet>

A fiber sheet of the present embodiment includes the above fiber F. Specifically, the fiber sheet is an aggregate of a plurality of the fibers F. The fiber sheet may be substantially composed of only the fiber F. The fiber sheet may be a woven fabric or may be a nonwoven fabric. The shape of the fiber sheet is not limited in particular, and examples thereof include a flat plate shape, a corrugated shape, a pleated shape, and the like.

In the fiber sheet, at a portion where two or more fibers F cross each other, these fibers F may be fused to each other. When the fibers F are partially fused to each other, strength of the fiber sheet tends to be improved. However, from the viewpoint of improving the specific surface area of the fiber sheet, the fibers F need not necessarily be fused to each other.

<Embodiment of structure>

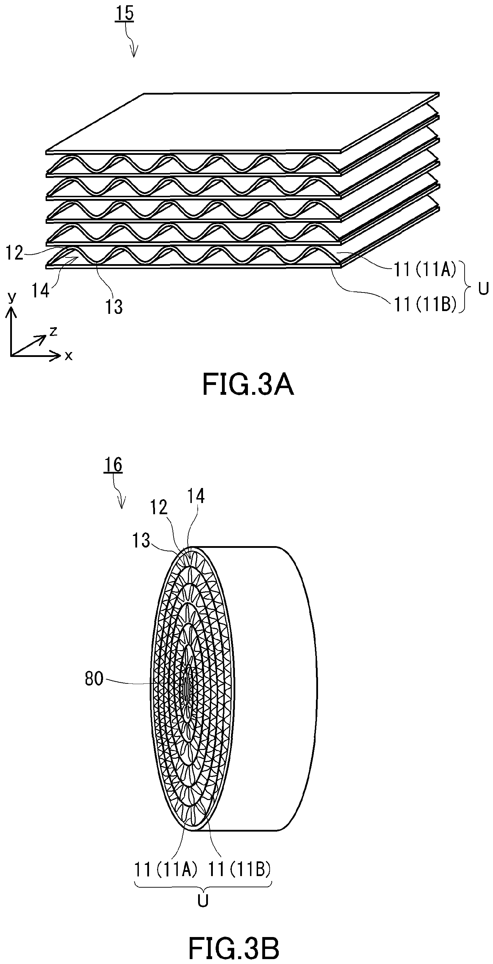

As shown in FIG. 3A, a structure 15 of the present embodiment includes a fiber sheet 11 described above, and has an air flow path 14. Typically, the structure 15 is a honeycomb structure having a plurality of the air flow paths 14 extending in the same direction.

The structure 15 includes an adsorbent unit U in which a fiber sheet 11A having a corrugated shape and a fiber sheet 11B having a flat plate shape are stacked, for example. In the fiber sheet 11A, a plurality of hill portions 12 and a plurality of valley portions 13 are alternately arranged. Between the hill portions 12 or the valley portions 13 of the fiber sheet 11A and the fiber sheet 11B, the air flow paths 14 are formed. In the present embodiment, a direction x is the direction (wave direction) in which the plurality of hill portions 12 and the plurality of valley portions 13 of the fiber sheet 11A are alternately arranged. A direction y is the stacking direction of the fiber sheets 11A and 11B in the adsorbent unit U. A direction z is the direction orthogonal to each of the directions x and y, and is the direction in which the air flow paths 14 extend.

The structure 15 includes a plurality of the adsorbent units U, for example. The number of the adsorbent units U in the structure 15 is not limited in particular, and is 2 to 100, for example. In the structure 15, the plurality of the adsorbent units U are stacked in the direction y such that a plurality of the fiber sheets 11A and a plurality of the fiber sheets 11B are alternately arranged. Since the plurality of the adsorbent units U are stacked, the structure 15 has a block shape.

Each air flow path 14 is a through hole penetrating the structure 15 in the direction z. The air flow path 14 is surrounded by the fiber sheets 11A and 11B. In the structure 15, while acidic gas moves in the direction z through the air flow path 14, the acidic gas is efficiently adsorbed by the fiber sheets 11A and 11B.

In the structure 15, the smaller the thicknesses of the fiber sheets 11A and 11B are, the larger the cross-sectional area of the air flow path 14 can be adjusted to be. The structure 15 having a large cross-sectional area of the air flow path 14 is suitable for reduction of pressure loss caused, for example, by coming into contact with acidic gas. With the structure 15 having reduced pressure loss, power of a fan that is used in order to move acidic gas can be reduced, for example. In a case where the amount of substance of the amino group per unit volume of the fiber sheet 11 is large, there is a tendency that acidic gas can be sufficiently adsorbed even when the thickness of the fiber sheet 11 is small.

<Modification of structure>

The shape of the structure 15 including the fiber sheet 11 is not limited to that shown in FIG. 3A. A structure 16 shown in FIG. 3B has a shape in which one adsorbent unit U is wound around a central tube 80. Except for this, the configuration of the structure 16 is the same as the configuration of the structure 15.

The structure 16 has a columnar shape. In the structure 16, the plurality of hill portions 12 and the plurality of valley portions 13 of the fiber sheet 11A are alternately arranged in the circumferential direction of the structure 16. Each air flow path 14 formed between the hill portions 12 or the valley portions 13 of the fiber sheet 11A and the fiber sheet 11B penetrates the structure 16 in the direction in which the central tube 80 extends. In the structure 16, while acidic gas moves, through the air flow path 14, in the direction in which the central tube 80 extends, the acidic gas is efficiently adsorbed by the fiber sheets 11A and 11B.

[Example]

In the following, the present invention will be described in further detail using Examples and Comparative Examples. However, the present invention is not limited thereto.

(Example 1)

First, as the amine monomer, 1.24 g of triethylenetetramine (TETA manufactured by Shigma-Aldrich Co. LLC.) was prepared, and as the epoxy monomer, 1.00 g of 1,7-octadiene diepoxide (ODE manufactured by Tokyo Chemical Industry Co., Ltd.) and 0.25 g of 1,3-bis(N,N-diglycidylaminomethyl)cyclohexane (TETRAD-C manufactured by MITSUBISHI GAS CHEMICAL COMPANY, INC.) were prepared. Next, 10 g of polyvinyl alcohol (PVA-217 manufactured by Kuraray Co., Ltd.: saponification degree 88, polymerization degree 1700) as the thermoplastic resin T was dissolved in 90 g of pure water to obtain an aqueous solution having a concentration of 10 wt%. Next, this aqueous solution and the prepared monomers were mixed to prepare a raw material. In the raw material, the ratio (blending ratio) between the weight of the aqueous solution of the thermoplastic resin T and the total weight of the amine monomer and the epoxy monomer was 9:1.

Next, using the production device 10 shown in FIG. 1, the raw material was discharged from the discharge part 1. At this time, 10 kV voltage was applied to the raw material. In the production device 10, the distance between the discharge part 1 and the collection part 2 was 8 cm. As the discharge part 1, a syringe was used. Specifically, an all-plastic syringe (5 mL) manufactured by HANKE to which a non-bevel needle 22G manufactured by Terumo Corporation was set, was used as the discharge part 1. Discharge of the raw material was performed by pushing the plunger of the syringe at a speed of 0.006 mm/min. In the space 6, the discharge substance 5 from the discharge part 1 was heated by a heat gun. The temperature (the heating temperature of the discharge substance 5) of air sent from the heat gun was 100°C. Through the heating of the discharge substance 5, polymerization reaction of the compound group (TETA, ODE, and TETRAD-C) included in the discharge substance 5 proceeded, whereby the polymer P having the amino group was formed. Accordingly, in the space 6, a fiber of Example 1 was formed. This fiber was collected by the collection part 2.

(Examples 2 to 7)

Fibers of Examples 2 to 7 were obtained by the same method as that in Example 1, except that the heating temperature of the discharge substance 5 and the concentration of the thermoplastic resin T in the aqueous solution were changed as shown in Table 1. In Examples 2 and 5, the fibers were prepared under the same condition except that the temperature and the humidity of the atmosphere in the production device 10 were different.

(Example 8)

First, as the amine monomer, 2.06 g of triethylenetetramine (TETA manufactured by Shigma-Aldrich Co. LLC.) was prepared, and as the epoxy monomer, 1.00 g of ethylene glycol diglycidyl ether (DENACOL EX-810 manufactured by Nagase ChemteX Corporation) and 1.50 g of pentaerythritol tetraglycidyl ether (Shofree PETG manufactured by Showa Denko K.K.) were prepared. Next, 8 g of polyvinyl alcohol (PVA-117 manufactured by Kuraray Co., Ltd.: saponification degree 98, polymerization degree 1700) as the thermoplastic resin T was dissolved in 92 g of pure water to obtain an aqueous solution having a concentration of 8 wt%. Next, this aqueous solution and the prepared monomers were mixed to prepare a raw material. In the raw material, the ratio (blending ratio) between the weight of the aqueous solution of the thermoplastic resin T and the total weight of the amine monomer and the epoxy monomer was 8:1. A fiber of Example 8 was obtained by the same method as that in Example 1, except that: this raw material was used; and the heating temperature of the discharge substance 5 was changed to 120°C.

(Example 9)

First, as the amine monomer, 0.97 g of triethylenetetramine (TETA manufactured by Shigma-Aldrich Co. LLC.) was prepared, and as the epoxy monomer, 1.00 g of ethylene glycol diglycidyl ether (DENACOL EX-810 manufactured by Nagase ChemteX Corporation) and 0.25 g of glycerol polyglycidyl ether (DENACOL EX-313 manufactured by Nagase ChemteX Corporation) were prepared. Next, 8 g of polyvinyl alcohol (PVA-117 manufactured by Kuraray Co., Ltd.: saponification degree 98, polymerization degree 1700) as the thermoplastic resin T was dissolved in 92 g of pure water to obtain an aqueous solution having a concentration of 8 wt%. Next, this aqueous solution and the prepared monomers were mixed to prepare a raw material. In the raw material, the ratio (blending ratio) between the weight of the aqueous solution of the thermoplastic resin T and the total weight of the amine monomer and the epoxy monomer was 10:1. A fiber of Example 9 was obtained by the same method as that in Example 1, except that: this raw material was used; and the heating temperature of the discharge substance 5 was changed to 120°C.

(Example 10)

First, as the amine prepolymer, 1.40 g of polyethyleneimine (EPOMIN SP-006 manufactured by NIPPON SHOKUBAI CO., LTD.) was prepared, and as the epoxy monomer, 0.70 g of ethylene glycol diglycidyl ether (DENACOL EX-810 manufactured by Nagase ChemteX Corporation) and 0.30 g of sorbitol polyglycidyl ether (DENACOL EX-614B manufactured by Nagase ChemteX Corporation) were prepared. Next, 8 g of polyvinyl alcohol (PVA-117 manufactured by Kuraray Co., Ltd.: saponification degree 98, polymerization degree 1700) as the thermoplastic resin T was dissolved in 92 g of pure water to obtain an aqueous solution having a concentration of 8 wt%. Next, this aqueous solution and the prepared prepolymer and monomers were mixed to prepare a raw material. In the raw material, the ratio (blending ratio) between the weight of the aqueous solution of the thermoplastic resin T and the total weight of the amine prepolymer and the epoxy monomer was 8:1. A fiber of Example 10 was obtained by the same method as that in Example 1, except that: this raw material was used; and the heating temperature of the discharge substance 5 was changed to 120°C.

(Example 11)

First, as the amine prepolymer, 1.40 g of polyethyleneimine (EPOMIN SP-006 manufactured by NIPPON SHOKUBAI CO., LTD.) was prepared, and as the epoxy monomer, 0.70 g of ethylene glycol diglycidyl ether (DENACOL EX-810 manufactured by Nagase ChemteX Corporation) and 0.30 g of sorbitol polyglycidyl ether (DENACOL EX-614B manufactured by Nagase ChemteX Corporation) were prepared. Next, 8 g of polyvinyl alcohol (PVA-117 manufactured by Kuraray Co., Ltd.: saponification degree 98, polymerization degree 1700) as the thermoplastic resin T was dissolved in 92 g of pure water to obtain an aqueous solution having a concentration of 8 wt%. Next, this aqueous solution and the prepared prepolymer and monomers were mixed. Next, as the plasticizer, 0.16 g of polyethylene glycol (PEG 400 manufactured by FUJIFILM Wako Pure Chemical Corporation) was further added to prepare a raw material. In the raw material, the ratio of the weight of the plasticizer relative to the total weight of the prepolymer, the monomers, and the thermoplastic resin T was 5 wt%. In the raw material, the ratio (blending ratio) between the weight of the aqueous solution of the thermoplastic resin T and the total weight of the amine prepolymer and the epoxy monomer was 9:1. A fiber of Example 11 was obtained by the same method as that in Example 1, except that: this raw material was used; and the heating temperature of the discharge substance 5 was changed to 120°C.

(Example 12)

First, as the amine prepolymer, 1.59 g of polyethyleneimine (EPOMIN SP-006 manufactured by NIPPON SHOKUBAI CO., LTD.) was prepared, and as the epoxy monomer, 0.80 g of ethylene glycol diglycidyl ether (DENACOL EX-810 manufactured by Nagase ChemteX Corporation) and 0.20 g of 1,3-bis(N,N-diglycidylaminomethyl)cyclohexane (TETRAD-C manufactured by MITSUBISHI GAS CHEMICAL COMPANY, INC.) were prepared. Next, 8 g of polyvinyl alcohol (PVA-117 manufactured by Kuraray Co., Ltd.: saponification degree 98, polymerization degree 1700) as the thermoplastic resin T was dissolved in 92 g of pure water to obtain an aqueous solution having a concentration of 8 wt%. Next, this aqueous solution and the prepared prepolymer and monomers were mixed to prepare a raw material. In the raw material, the ratio (blending ratio) between the weight of the aqueous solution of the thermoplastic resin T and the total weight of the amine prepolymer and the epoxy monomer was 9:1. A fiber of Example 12 was obtained by the same method as that in Example 1, except that: this raw material was used; and the heating temperature of the discharge substance 5 was changed to 120°C.

(Example 13)

First, as the amine prepolymer, 1.59 g of polyethyleneimine (EPOMIN SP-006 manufactured by NIPPON SHOKUBAI CO., LTD.) was prepared, and as the epoxy monomer, 0.80 g of ethylene glycol diglycidyl ether (DENACOL EX-810 manufactured by Nagase ChemteX Corporation) and 0.20 g of 1,3-bis(N,N-diglycidylaminomethyl)cyclohexane (TETRAD-C manufactured by MITSUBISHI GAS CHEMICAL COMPANY, INC.) were prepared. Next, 8 g of polyvinyl alcohol (PVA-117 manufactured by Kuraray Co., Ltd.: saponification degree 98, polymerization degree 1700) as the thermoplastic resin T was dissolved in 92 g of pure water to obtain an aqueous solution having a concentration of 8 wt%. Next, this aqueous solution and the prepared prepolymer and monomers were mixed. Next, as the plasticizer, 0.22 g of polyethylene glycol (PEG 400 manufactured by FUJIFILM Wako Pure Chemical Corporation) was further added to prepare a raw material. In the raw material, the ratio of the weight of the plasticizer relative to the total weight of the prepolymer, the monomers, and the thermoplastic resin T was 5 wt%. In the raw material, the ratio (blending ratio) between the weight of the aqueous solution of the thermoplastic resin T and the total weight of the amine prepolymer and the epoxy monomer was 9:1. A fiber of Example 13 was obtained by the same method as that in Example 1, except that: this raw material was used; and the heating temperature of the discharge substance 5 was changed to 120°C.

(Example 14)

First, as the amine prepolymer, 1.64 g of polyethyleneimine (EPOMIN SP-006 manufactured by NIPPON SHOKUBAI CO., LTD.) was prepared, and as the epoxy monomer, 1.00 g of ethylene glycol diglycidyl ether (DENACOL EX-810 manufactured by Nagase ChemteX Corporation) was prepared. Next, 8 g of polyvinyl alcohol (PVA-117 manufactured by Kuraray Co., Ltd.: saponification degree 98, polymerization degree 1700) as the thermoplastic resin T was dissolved in 92 g of pure water to obtain an aqueous solution having a concentration of 8 wt%. Next, this aqueous solution and the prepared prepolymer and monomer were mixed to prepare a raw material. In the raw material, the ratio (blending ratio) between the weight of the aqueous solution of the thermoplastic resin T and the total weight of the amine prepolymer and the epoxy monomer was 9:1. A fiber of Example 14 was obtained by the same method as that in Example 1, except that: this raw material was used; and the heating temperature of the discharge substance 5 was changed to 120°C.

(Example 15)

First, as the polymer including a constitutional unit derived from aziridines, 1.00 g of polyethyleneimine (PEI manufactured by Sigma-Aldrich Co. LLC.: weight average molecular weight 750000, 50 wt% aqueous solution) was prepared. Next, 8 g of polyvinyl alcohol (PVA-117 manufactured by Kuraray Co., Ltd.: saponification degree 98, polymerization degree 1700) as the thermoplastic resin T was dissolved in 92 g of pure water to obtain an aqueous solution having a concentration of 8 wt%. Next, this aqueous solution and the prepared polymer was mixed to prepare a raw material. In the raw material, the ratio (blending ratio) between the weight of the aqueous solution of the thermoplastic resin T and the weight of the polymer was 9:1. A fiber of Example 15 was obtained by the same method as that in Example 1, except that: this raw material was used; and the heating temperature of the discharge substance 5 was changed to 50°C.

(Example 16)

First, as the polymer including a constitutional unit derived from aziridines, 0.42g of polyethyleneimine (EPOMIN SP-003 manufactured by NIPPON SHOKUBAI CO., LTD.) was prepared. Next, 8 g of polyvinyl alcohol (PVA-117 manufactured by Kuraray Co., Ltd.: saponification degree 98, polymerization degree 1700) as the thermoplastic resin T was dissolved in 92 g of pure water to obtain an aqueous solution having a concentration of 8 wt%. Next, this aqueous solution and the prepared polymer were mixed to prepare a raw material. In the raw material, the ratio (blending ratio) between the weight of the aqueous solution of the thermoplastic resin T and the weight of the polymer was 8:0.42. A fiber of Example 16 was obtained by the same method as that in Example 1, except that: this raw material was used; and the heating temperature of the discharge substance 5 was changed to 50°C.

(Example 17)

First, as the amine prepolymer, 1.59 g of polyethyleneimine (EPOMIN SP-006 manufactured by NIPPON SHOKUBAI CO., LTD.) was prepared, and as the epoxy monomer, 0.80 g of ethylene glycol diglycidyl ether (DENACOL EX-810 manufactured by Nagase ChemteX Corporation) and 0.20 g of 1,3-bis(N,N-diglycidylaminomethyl)cyclohexane (TETRAD-C manufactured by MITSUBISHI GAS CHEMICAL COMPANY, INC.) were prepared. Next, 10 g of polyvinylpyrrolidone (PVP K90 manufactured by FUJIFILM Wako Pure Chemical Corporation) as the thermoplastic resin T was dissolved in 90 g of pure water to obtain an aqueous solution having a concentration of 10 wt%. Next, this aqueous solution and the prepared prepolymer and monomers were mixed to prepare a raw material. In the raw material, the ratio (blending ratio) between the weight of the aqueous solution of the thermoplastic resin T and the total weight of the amine prepolymer and the epoxy monomer was 9:1. A fiber of Example 17 was obtained by the same method as that in Example 1, except that: this raw material was used; and the heating temperature of the discharge substance 5 was changed to 120°C.

(Example 18)

First, as the amine prepolymer, 1.59 g of polyethyleneimine (EPOMIN SP-006 manufactured by NIPPON SHOKUBAI CO., LTD.) was prepared, and as the epoxy monomer, 0.80 g of ethylene glycol diglycidyl ether (DENACOL EX-810 manufactured by Nagase ChemteX Corporation) and 0.20 g of 1,3-bis(N,N-diglycidylaminomethyl)cyclohexane (TETRAD-C manufactured by MITSUBISHI GAS CHEMICAL COMPANY, INC.) were prepared. Next, 8 g of polyvinyl alcohol (PVA-117 manufactured by Kuraray Co., Ltd.: saponification degree 98, polymerization degree 1700) as the thermoplastic resin T was dissolved in 92 g of pure water to obtain an aqueous solution having a concentration of 8 wt%. Next, 10 g of polyethylene glycol (PEG 20000 manufactured by FUJIFILM Wako Pure Chemical Corporation) as the thermoplastic resin T was dissolved in 90 g of pure water to obtain an aqueous solution having a concentration of 10 wt%. Next, these aqueous solution and the prepared prepolymer and monomers were mixed to prepare a raw material. In the raw material, the ratio (blending ratio) between the weight of the aqueous solution of the polyvinyl alcohol resin, the weight of the aqueous solution of the polyethylene glycol (polyether resin), and the total weight of the amine prepolymer and the epoxy monomer was 8:1:1. A fiber of Example 18 was obtained by the same method as that in Example 1, except that: this raw material was used; and the heating temperature of the discharge substance 5 was changed to 120°C.

(Example 19)

First, as the amine prepolymer, 1.98 g of polyethyleneimine (EPOMIN SP-006 manufactured by NIPPON SHOKUBAI CO., LTD.) was prepared, and as the epoxy monomer, 0.80 g of ethylene glycol diglycidyl ether (DENACOL EX-810 manufactured by Nagase ChemteX Corporation) and 0.20 g of 1,3-bis(N,N-diglycidylaminomethyl)cyclohexane (TETRAD-C manufactured by MITSUBISHI GAS CHEMICAL COMPANY, INC.) were prepared. Next, 8 g of polyvinyl alcohol (PVA-117 manufactured by Kuraray Co., Ltd.: saponification degree 98, polymerization degree 1700) as the thermoplastic resin T was dissolved in 92 g of pure water to obtain an aqueous solution having a concentration of 8 wt%. Next, this aqueous solution and the prepared prepolymer and monomers were mixed to prepare a raw material. In the raw material, the ratio (blending ratio) between the weight of the aqueous solution of the thermoplastic resin T and the total weight of the amine prepolymer and the epoxy monomer was 9:1. A fiber of Example 19 was obtained by the same method as that in Example 1, except that: this raw material was used; and the heating temperature of the discharge substance 5 was changed to 120°C.

(Example 20)

First, as the amine prepolymer, 2.66 g of polyethyleneimine (EPOMIN SP-006 manufactured by NIPPON SHOKUBAI CO., LTD.) was prepared, and as the epoxy monomer, 0.80 g of ethylene glycol diglycidyl ether (DENACOL EX-810 manufactured by Nagase ChemteX Corporation) and 0.20 g of 1,3-bis(N,N-diglycidylaminomethyl)cyclohexane (TETRAD-C manufactured by MITSUBISHI GAS CHEMICAL COMPANY, INC.) were prepared. Next, 7 g of polyvinyl alcohol (PVA-117 manufactured by Kuraray Co., Ltd.: saponification degree 98, polymerization degree 1700) as the thermoplastic resin T was dissolved in 93 g of pure water to obtain an aqueous solution having a concentration of 7 wt%. Next, this aqueous solution and the prepared prepolymer and monomers were mixed to prepare a raw material. In the raw material, the ratio (blending ratio) between the weight of the aqueous solution of the thermoplastic resin T and the total weight of the amine prepolymer and the epoxy monomer was 9:1. A fiber of Example 20 was obtained by the same method as that in Example 1, except that: this raw material was used; and the heating temperature of the discharge substance 5 was changed to 120°C.

(Comparative Example 1)

Preparation of a fiber was attempted by the same method as that in Example 1, except that: when a raw material was to be prepared, the aqueous solution of the polyvinyl alcohol resin was not used; and the discharge substance 5 from the discharge part 1 was not heated in the space 6. However, from the tip of the syringe, the raw material was dropped as droplets and no fiber was formed.

(Comparative Example 2)

Preparation of a fiber was attempted by the same method as that in Example 1, except that the discharge substance 5 from the discharge part 1 was not heated in the space 6. However, no fiber was formed, and a film was formed on the collection part 2.

(Comparative Example 3)

Preparation of a fiber was attempted by the same method as that in Comparative Example 2, except that, in the raw material, the ratio (blending ratio) between the weight of the aqueous solution of the polyvinyl alcohol resin and the total weight of the amine monomer and the epoxy monomer was changed to 8:2. However, no fiber was formed, and a film was formed on the collection part 2.

(Comparative Example 4)

Preparation of a fiber was attempted by the same method as that in Comparative Example 3, except that, with respect to the aqueous solution of the polyvinyl alcohol resin, the solvent was changed to a mixed solvent of water and methanol. However, no fiber was formed, and a film was formed on the collection part 2.

(Comparative Example 5)

Preparation of a fiber was attempted by the same method as that in Comparative Example 2, except that the discharge substance 5 was collected by the collection part 2 and then the discharge substance 5 was heated at 120°C on the collection part 2. However, no fiber was formed, and a film was formed on the collection part 2.

[Observation by scanning electron microscope]

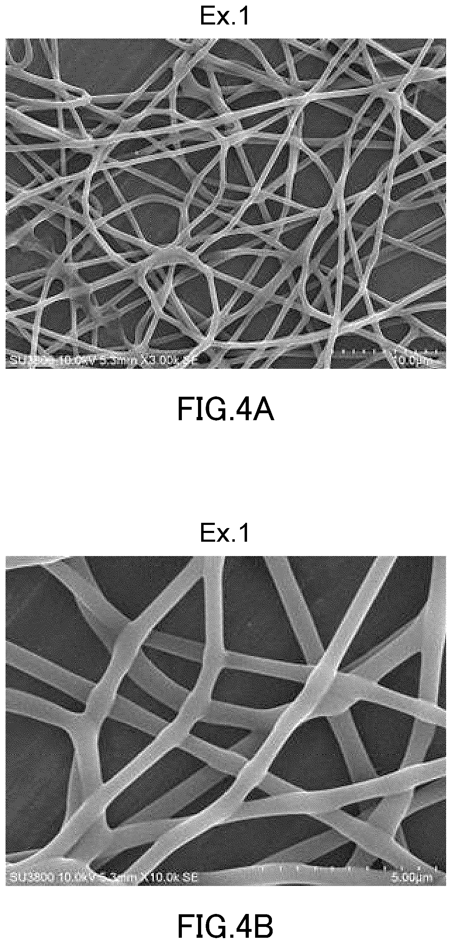

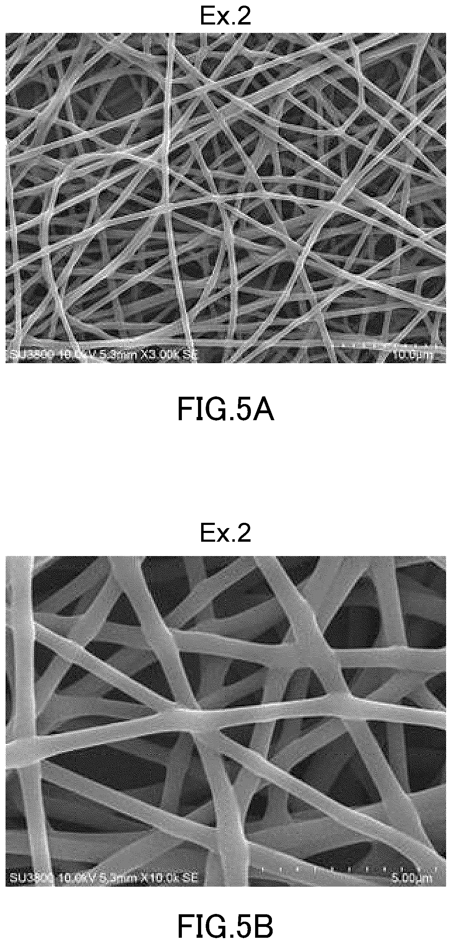

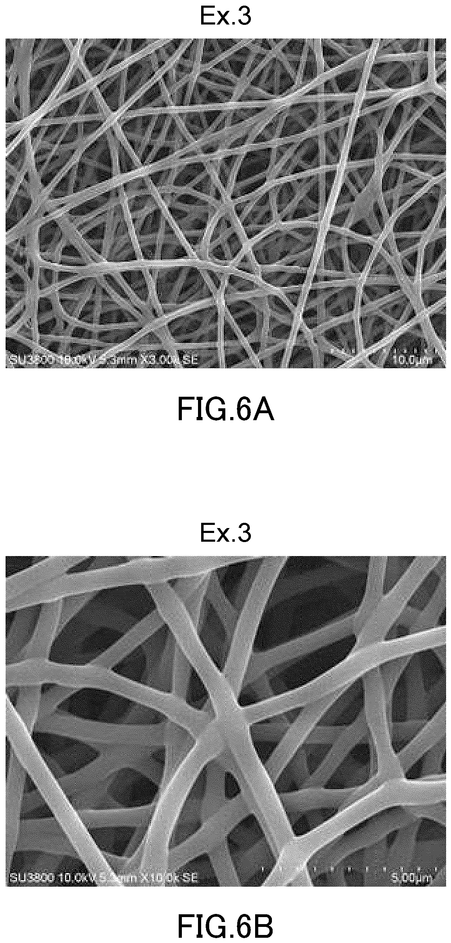

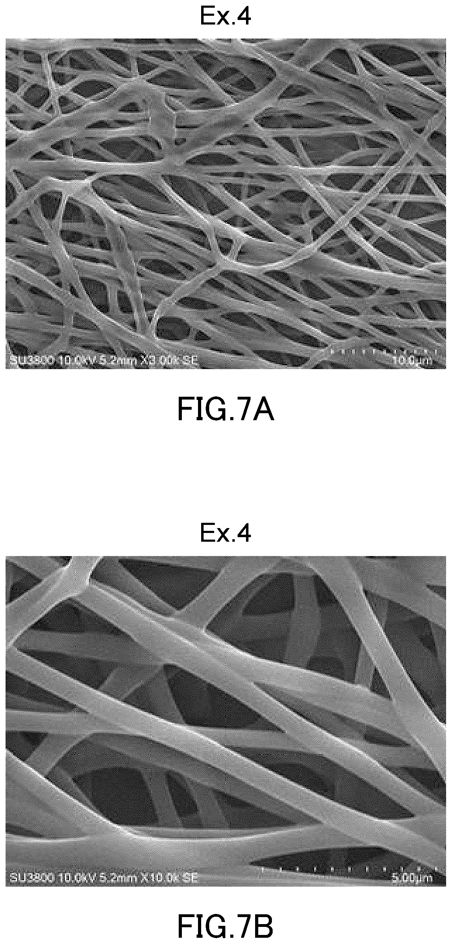

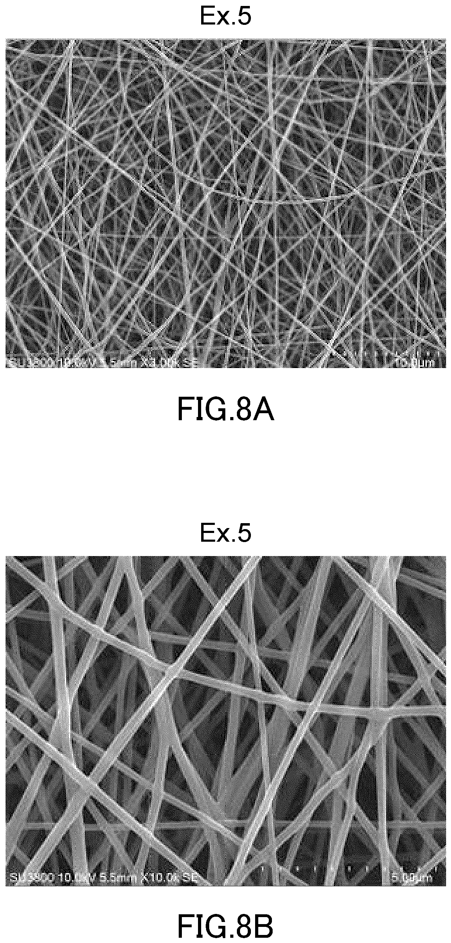

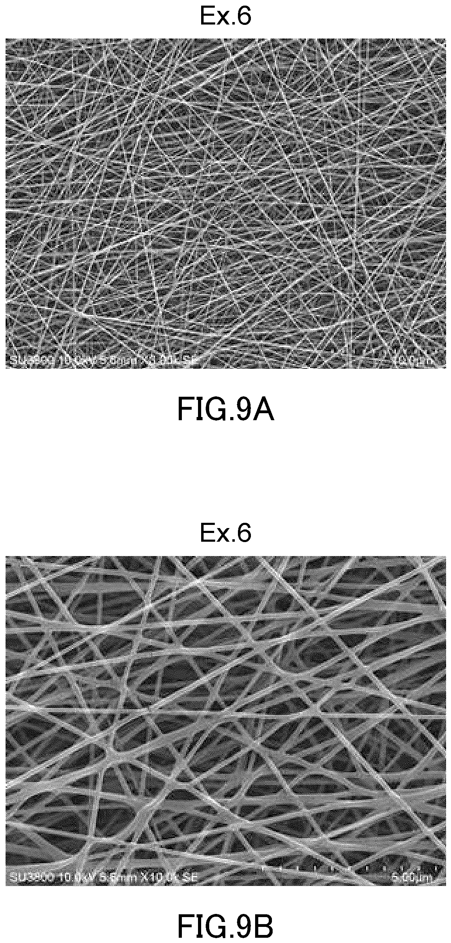

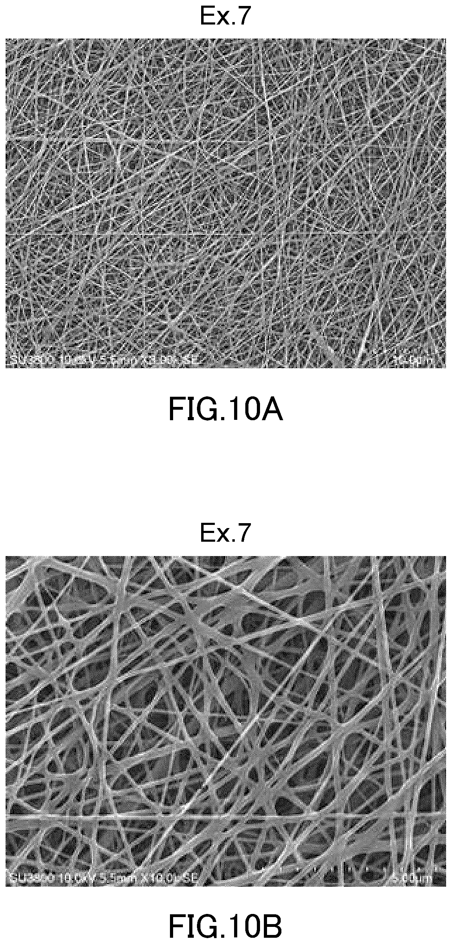

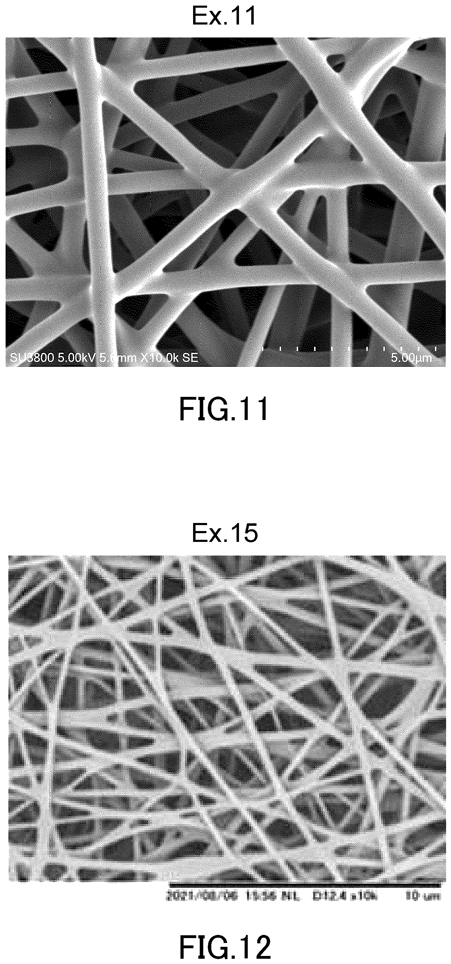

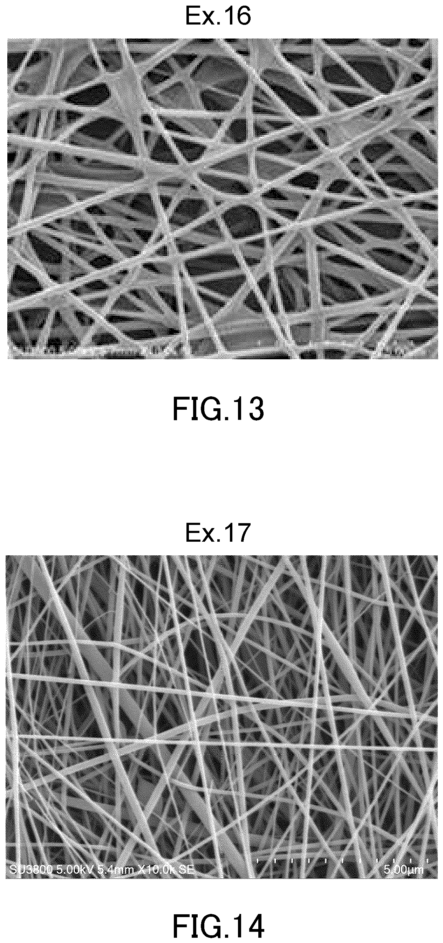

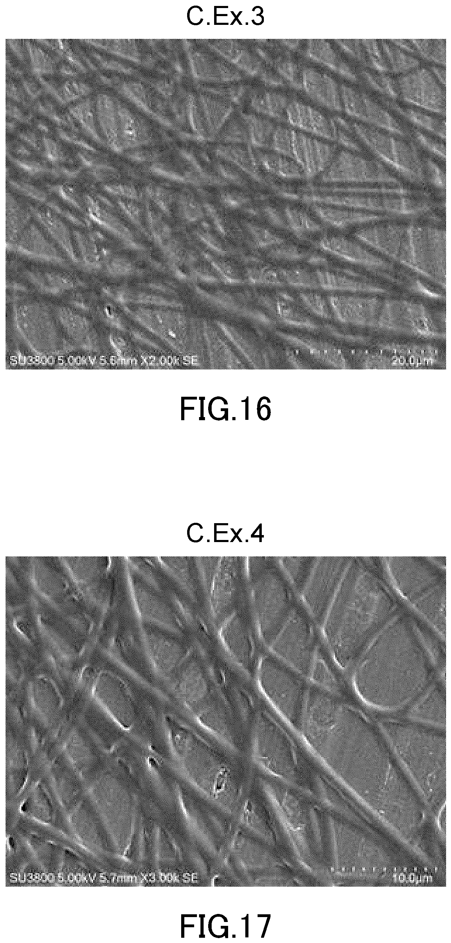

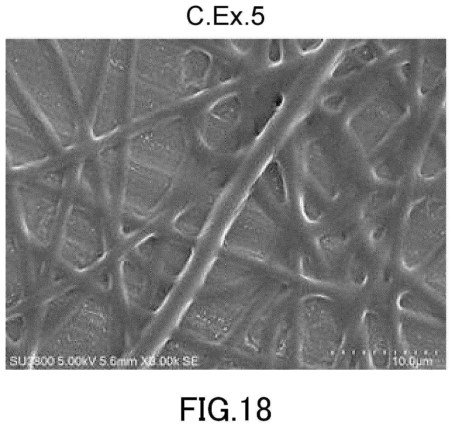

With respect to the fibers of Examples 1 to 20 and the films obtained in Comparative Examples 2 to 5, observation by a scanning electron microscope (SEM) was performed. With respect to Examples 1 to 7, 11, and 15 to 17 and Comparative Examples 2 to 5, observation results are shown in FIGS. 4A to 18.

[Average fiber diameter]

With respect to the fibers of Examples 1 to 20, the average fiber diameter was measured by the method described above. The results are shown in Tables 1 and 2.

[Adsorption amount of carbon dioxide]

With respect to the fibers of Examples 4 to 16 and 19 to 20 and the film obtained in Comparative Example 2, the adsorption amount A1 of carbon dioxide when these fibers and the film were each caused to be in contact with the mixed gas G composed of carbon dioxide, nitrogen, and water vapor for 15 hours was measured by the method described above. For the measurement of the adsorption amount A1, the measurement device 20 shown in FIG. 2 was used. The results are shown in Tables 1 to 3.

Further, with respect to the fibers of Examples 5 to 16 and 19 to 20, the adsorption amount A2 of carbon dioxide when each fiber was caused to be in contact with the mixed gas G composed of carbon dioxide, nitrogen, and water vapor for 60 minutes was measured by the method described above. On the basis of the obtained value, the ratio R of the adsorption amount A2 (mmol/g) relative to the adsorption amount A1 (mmol/g) was calculated. The results are shown in Tables 1 and 2.

[Weight ratio of nitrogen element]

With respect to the fibers of Examples 5 to 9, 11 to 12, 14 to 16, and 19 to 20, CHN element analysis was performed under a condition of a combustion tube temperature of 950°C, a reduction tube temperature of 500°C, and a carrier gas flow rate of 200 mL/min, by using a CHN elemental analyzer (vario EL III manufactured by Elementar). As the detector, a thermal conductivity detector (TCD) was used. Accordingly, the weight ratio w (N ratio) of nitrogen element included in the fiber was measured. The results are shown in Tables 1 and 2.

[Table 1]

| | | Example 1 | Example 2 | Example 3 | Example 4 | Example 5 | Example 6 |
|---|---|---|---|---|---|---|---|
| Concentration of resin T (wt%)*1 | | 10 | 10 | 10 | 10 | 10 | 8 |
| Blending ratio (resin TEA)*2 | | 9:1 | 9:1 | 9:1 | 9:1 | 9:1 | 9:1 |
| Raw material | Solid component concentration (wt%) | 19.0 | 19.0 | 19.0 | 19.0 | 19.0 | 17.2 |
| | Thermoplastic resin T | PVA-217 | PVA-217 | PVA-217 | PVA-217 | PVA-217 | PVA-217 |
| | Epoxy compound 1 Blending amount (g) | ODE | ODE | ODE | ODE | ODE | ODE |
| | | 1.00 | 1.00 | 1.00 | 1.00 | 1.00 | 1.00 |
| | Epoxy compound 2 Blending amount (g) | T-C | T-C | T-C | T-C | T-C | T-C |
| | | 0.25 | 0.25 | 0.25 | 0.25 | 0.25 | 0.25 |
| | Amine compound Blending amount (g) | TETA | TETA | TETA | TETA | TETA | TETA |
| | | 1.24 | 1.24 | 1.24 | 1.24 | 1.24 | 1.24 |
| | Plasticizer Blending amount (g) | - | - | - | - | - | - |
| | | - | - | - | - | - | - |
| AE ratio (wt%)*3 | | 53 | 53 | 53 | 53 | 53 | 58 |
| Heating temperature (°C) | | 100 | 120 | 140 | 160 | 120 | 120 |
| Average fiber diameter (nm) | | 430 | 450 | 400 | 480 | 240 | 170 |
| $CO_2$ adsorption amount A1 (mmol/g) | | - | - | - | 1.13 | 1.04 | 1.25 |
| Ratio R (%) | | - | - | - | - | 29.9 | 27.6 |
| N ratio (wt%) | | - | - | - | - | 8.0 | 9.3 |

(*1) Concentration of the thermoplastic resin T in the aqueous solution
(*2) Ratio between the weight of the aqueous solution of the thermoplastic resin T and the total weight of the amine compound and the epoxy compound
(*3) Ratio of the weight of the polymer P relative to the total value of the weight of the polymer P and the weight of the thermoplastic resin T

[Table 1] (cont.)

|  |  | Example 7 | Example 8 | Example 9 | Example 10 | Example 11 | Example 12 |
|---|---|---|---|---|---|---|---|
| Concentration of resin T (wt%) *1 | | 6 | 8 | 8 | 8 | 8 | 8 |
| Blending ratio (resin TEA)*2 | | 9:1 | 8:1 | 10:1 | 8:1 | 9:1 | 9:1 |
| Raw material | Solid component concentration (wt%) | 15.4 | 18.2 | 16.4 | 17.2 | 17.9 | 17.2 |
| | Thermoplastic resin T | PVA-217 | PVA-117 | PVA-117 | PVA-117 | PVA-117 | PVA-117 |
| | Epoxy compound 1 Blending amount (g) | ODE | EDE | EDE | EDE | EDE | EDE |
| | | 1.00 | 1.00 | 1.00 | 0.70 | 0.70 | 0.80 |
| | Epoxy compound 2 Blending amount (g) | T-C | PETG | EX-313 | EX-614B | EX-614B | T-C |
| | | 0.25 | 1.50 | 0.25 | 0.30 | 0.30 | 0.20 |
| | Amine compound Blending amount (g) | TETA | TETA | TETA | SP-006 | SP-006 | SP-006 |
| | | 1.24 | 2.06 | 0.97 | 1.40 | 1.40 | 1.59 |
| | Plasticizer Blending amount (g) | - | - | - | - | PEG-400 | - |
| | | - | - | - | - | 0.16 | - |
| AE ratio (wt%)*3 | | 65 | 61 | 56 | 61 | 55 | 58 |
| Heating temperature (°C) | | 120 | 120 | 120 | 120 | 120 | 120 |
| Average fiber diameter (nm) | | 130 | 480 | 530 | 650 | 650 | 540 |
| $CO_2$ adsorption amount A1 (mmol/g) | | 1.40 | 1.16 | 1.14 | 1.71 | 1.59 | 2.21 |
| Ratio R (%) | | 30.1 | 44.9 | 64.1 | 56.2 | 57.4 | 42.4 |
| N ratio (wt%) | | 10.2 | 9.2 | 8.2 | - | 11.3 | 12.3 |

(*1) Concentration of the thermoplastic resin T in the aqueous solution
(*2) Ratio between the weight of the aqueous solution of the thermoplastic resin T and the total weight of the amine compound and the epoxy compound
(*3) Ratio of the weight of the polymer P relative to the total value of the weight of the polymer P and the weight of the thermoplastic resin T

[Table 2]

| | | Example 13 | Example 14 | Example 15 | Example 16 | Example 17 | Example 18 | Example 19 | Example 20 |
|---|---|---|---|---|---|---|---|---|---|
| Concentration of resin T (wt%)*1 | | 8 | 8 | 8 | 8 | 10 | 8, 10 | 8 | 7 |
| Blending ratio (resin T:EA)*2 | | 9:1 | 9:1 | 9:1 | 8:0.42 | 9:1 | 8:1:1(*4) | 9:1 | 9:1 |
| Raw material | Solid component concentration (wt%) | 17.9 | 17.2 | 12.2 | 12.6 | 19.0 | 17.4 | 17.2 | 16.3 |
| | Thermoplastic resin T | PVA-117 | PVA-117 | PVA-117 | PVA-117 | PVP-K90 | PVA-117 PEG-20000 | PVA-117 | PVA-117 |
| | Epoxy compound 1 Blending amount (g) | EDE | EDE | - | - | EDE | EDE | EDE | EDE |
| | | 0.80 | 1 | - | - | 0.80 | 0.80 | 0.80 | 0.80 |
| | Epoxy compound 2 Blending amount (g) | T-C | - | - | - | T-C | T-C | T-C | T-C |
| | | 0.20 | - | - | - | 0.20 | 0.20 | 0.20 | 0.20 |
| | Amine compound Blending amount (g) | SP-006 | SP-006 | PEI | SP-003 | SP-006 | SP-006 | SP-006 | SP-006 |
| | | 1.59 | 1.64 | 1.00 | 0.42 | 1.59 | 1.59 | 1.98 | 2.66 |
| | Plasticizer Blending amount (g) | PEG-400 | - | - | - | - | - | - | - |
| | | 0.22 | - | - | - | - | - | - | - |
| AE ratio (wt%)*3 | | 55 | 58 | 41 | 40 | 53 | 58 | 58 | 61 |
| Heating temperature (°C) | | 120 | 120 | 50 | 50 | 120 | 120 | 120 | 120 |
| Average fiber diameter (nm) | | 560 | 740 | 300 | 260 | 140 | 700 | 780 | 650 |
| $CO_2$ adsorption amount A1 (mmol/g) | | 1.72 | 2.08 | 1.99 | 2.38 | - | - | 1.91 | 2.08 |
| Ratio R (%) | | 61.5 | 48.3 | 64.8 | 96.0 | - | - | 56.5 | 41.6 |
| N ratio (wt%) | | - | 12.7 | 12.8 | 11.5 | - | - | 13.4 | 15.4 |

(*1) Concentration of the thermoplastic resin T in the aqueous solution
(*2) Ratio between the weight of the aqueous solution of the thermoplastic resin T and the total weight of the amine compound and the epoxy compound
(*3) Ratio of the weight of the polymer P relative to the total value of the weight of the polymer P and the weight of the thermoplastic resin T
(*4) Ratio between the weight of the PVA aqueous solution, the weight of the PEG aqueous solution, and the total weight of the amine compound and the epoxy compound

[Table 3]

| | | Comparative Example 1 | Comparative Example 2 | Comparative Example 3 | Comparative Example 4 | Comparative Example 5 |
|---|---|---|---|---|---|---|
| Concentration of resin T (wt%) *1 | | - | 10 | 10 | 10 | 10 |
| Blending ratio (resin TEA)*2 | | - | 9:1 | 8:2 | 8:2 | 9:1 |
| Raw material | Solid component concentration (wt%) | 100.0 | 19.0 | 28.0 | 28.0 | 19.0 |
| | Thermoplastic resin T | - | PVA-217 | PVA-217 | PVA-217 | PVA-217 |
| | Epoxy compound 1 Blending amount (g) | ODE | ODE | ODE | ODE | ODE |
| | | 1.00 | 1.00 | 1.00 | 1.00 | 1.00 |
| | Epoxy compound 2 Blending amount (g) | T-C | T-C | T-C | T-C | T-C |
| | | 0.25 | 0.25 | 0.25 | 0.25 | 0.25 |
| | Amine compound Blending amount (g) | TETA | TETA | TETA | TETA | TETA |
| | | 1.24 | 1.24 | 1.24 | 1.24 | 1.24 |
| | Plasticizer Blending amount (g) | - | - | - | - | - |
| | | - | - | - | - | - |
| AE ratio (wt%)*3 | | 100 | 53 | 70 | 70 | 53 |
| Heating temperature (°C) | | - | - | - | - | - |
| Average fiber diameter (nm) | | - | - | - | - | - |
| $CO_2$ adsorption amount A1 (mmol/g) | | - | 0.83 | - | - | - |
| Ratio R (%) | | - | - | - | - | - |
| N ratio (wt%) | | - | - | - | - | - |

(*1) Concentration of the thermoplastic resin T in the aqueous solution
(*2) Ratio between the weight of the aqueous solution of the thermoplastic resin T and the total weight of the amine compound and the epoxy compound
(*3) Ratio of the weight of the polymer P relative to the total value of the weight of the polymer P and the weight of the thermoplastic resin T

In Tables 1 to 3, the epoxy monomer and the epoxy prepolymer are simply expressed as epoxy compound. The amine monomer, the amine prepolymer, and the polymer including a constitutional unit derived from aziridines are simply expressed as amine compound.

Abbreviations in Tables 1 to 3 are as follows.

PVA-217: polyvinyl alcohol (PVA-217 manufactured by Kuraray Co., Ltd., saponification degree 88, polymerization degree 1700)
PVA-117: polyvinyl alcohol (PVA-117 manufactured by Kuraray Co., Ltd., saponification degree 98, polymerization degree 1700)
PVP-K90: polyvinylpyrrolidone (PVP K90 manufactured by FUJIFILM Wako Pure Chemical Corporation)
PEG-20000: polyethylene glycol (PEG 20000 manufactured by FUJIFILM Wako Pure Chemical Corporation, weight average molecular weight about 20000)
ODE: 1,7-octadiene diepoxide (ODE manufactured by Tokyo Chemical Industry Co., Ltd.)

T-C: 1,3-bis(N,N-diglycidylaminomethyl)cyclohexane (TETRAD-C manufactured by MITSUBISHI GAS CHEMICAL COMPANY, INC.)
EDE: ethylene glycol diglycidyl ether (DENACOL EX-810 manufactured by Nagase ChemteX Corporation)
PETG: pentaerythritol tetraglycidyl ether (Shofree PETG manufactured by Showa Denko K.K.)
EX-313: glycerol polyglycidyl ether (DENACOL EX-313 manufactured by Nagase ChemteX Corporation)
EX-614B: sorbitol polyglycidyl ether (DENACOL EX-614B manufactured by Nagase ChemteX Corporation)
TETA: triethylenetetramine (TETA manufactured by Shigma-Aldrich Co. LLC.)
SP-006: polyethyleneimine (EPOMIN SP-006 manufactured by NIPPON SHOKUBAI CO., LTD., weight average molecular weight about 600)
PEI: polyethyleneimine (PEI manufactured by Sigma-Aldrich Co. LLC., weight average molecular weight 750000, 50 wt% aqueous solution)
SP-003: polyethyleneimine (EPOMIN SP-003 manufactured by NIPPON SHOKUBAI CO., LTD., weight average molecular weight about 300)
PEG-400: polyethylene glycol (PEG 400 manufactured by FUJIFILM Wako Pure Chemical Corporation, weight average molecular weight about 400)

Through observation by a scanning electron microscope, in Examples 1 to 20, it was confirmed that a fiber was obtained. In particular, in Examples 1 to 14 and 17 to 20, a fiber including the polymer P was able to be obtained by causing the compound group including the monomer and the prepolymer to react in the space 6. As seen from Examples 4 to 16 and 19 to 20, it can be said that the fiber including the polymer P has a large adsorption amount of carbon dioxide and is suitable for an adsorbent for acidic gas.

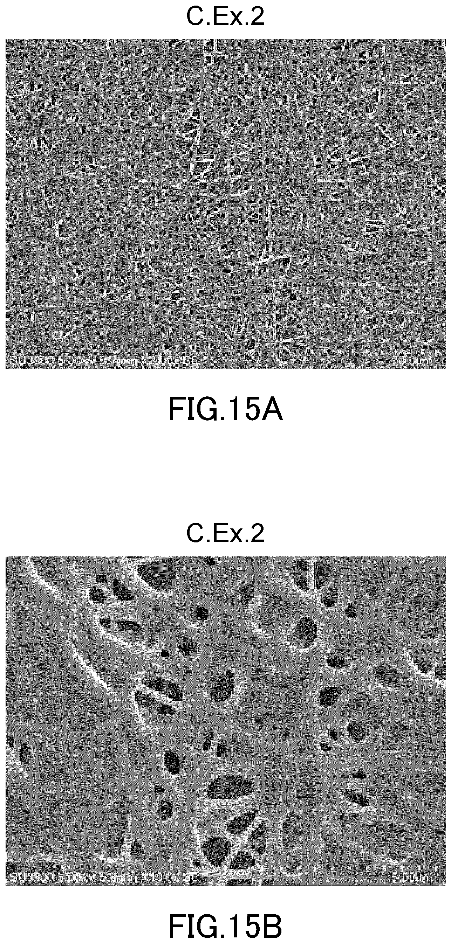

As seen from FIG. 15A to FIG. 18, in Comparative Examples 2 to 5 in which the discharge substance 5 was not heated in the space 6 between the discharge part 1 and the collection part 2 and reaction of the compound group was not caused to proceed, a film was formed on the collection part 2. From FIG. 15A to FIG. 18, a state where, in the entire film, a plurality of fibers are fused to each other can be confirmed.

INDUSTRIAL APPLICABILITY

The fiber of the present embodiment is suitable for an adsorbent for acidic gas. The fiber of the present embodiment can adsorb carbon dioxide in atmospheric air, for example.

**Claims**

1. A fiber comprising a polymer having an amino group.

2. The fiber according to claim 1, wherein

   an adsorption amount of carbon dioxide when the fiber is caused to be in contact with mixed gas composed of carbon dioxide, nitrogen, and water vapor for 15 hours is 0.1 mmol/g or more,
   where the carbon dioxide in the mixed gas has a concentration of 400 vol ppm and the mixed gas has a temperature of 23°C and a humidity of 50%RH.

3. The fiber according to claim 1 or 2, wherein
   the polymer is an amine polymer including a constitutional unit derived from an epoxy monomer.

4. The fiber according to any one of claims 1 to 3, wherein
   the amino group includes a secondary amino group.

5. The fiber according to any one of claims 1 to 4, further comprising a thermoplastic resin.

6. The fiber according to claim 5 wherein
   the thermoplastic resin includes a polyvinyl alcohol resin.

7. The fiber according to claim 5 or 6, wherein
   a ratio of a weight of the polymer relative to a total value of the weight of the polymer and a weight of the thermoplastic resin is 5 wt% or more.

8.  The fiber according to any one of claims 1 to 7, having an average fiber diameter of 1 to 1000 nm.

9.  A fiber sheet comprising the fiber according to any one of claims 1 to 7.

10. A production method for a fiber, the method comprising:

    discharging, from a discharge part, a raw material having a compound group including at least one selected from the group consisting of a monomer and a prepolymer, to send a discharge substance to a collection part; and applying, in a space between the discharge part and the collection part, energy to the compound group included in the discharge substance, to cause the compound group to react, thereby forming a polymer.

11. The production method according to claim 10, wherein the compound group includes at least one selected from the group consisting of an amine monomer and an amine prepolymer.

12. The production method according to claim 10 or 11, wherein the compound group includes an epoxy monomer.

13. The production method according to any one of claims 10 to 12, wherein the raw material further includes a thermoplastic resin.

14. The production method according to claim 13, wherein the thermoplastic resin includes a polyvinyl alcohol resin.

15. The production method according to any one of claims 10 to 14, wherein the raw material further includes water.

16. The production method according to any one of claims 10 to 15, wherein the energy is thermal energy.

17. The production method according to any one of claims 10 to 16, wherein the discharge substance is heated at a temperature of 70°C to 200°C to cause the compound group to react.

18. The production method according to any one of claims 10 to 17, wherein in a state where voltage is applied to the raw material, the raw material is discharged from the discharge part.

19. An acidic gas adsorption device comprising

    an adsorption part having a gas inlet and a gas outlet, wherein the adsorption part contains the fiber according to any one of claims 1 to 8.

# FIG.1

FIG.2

FIG.3A

FIG.3B

Ex.1

FIG.4A

Ex.1

FIG.4B

Ex.2

FIG.5A

Ex.2

FIG.5B

Ex.3

FIG.6A

Ex.3

FIG.6B

Ex.4

FIG.7A

Ex.4

FIG.7B

Ex.5

FIG.8A

Ex.5

FIG.8B

Ex.6

FIG.9A

Ex.6

FIG.9B

Ex.7

FIG.10A

Ex.7

FIG.10B

Ex.11

FIG.11

Ex.15

FIG.12

Ex.16

FIG.13

Ex.17

FIG.14

C.Ex.2

FIG.15A

C.Ex.2

FIG.15B

C.Ex.3

FIG.16

C.Ex.4

FIG.17

C.Ex.5

FIG.18

**EP 4 317 551 A1**

# INTERNATIONAL SEARCH REPORT

| | International application No. |
|---|---|
| | **PCT/JP2022/008667** |

| A. | CLASSIFICATION OF SUBJECT MATTER |
|---|---|
| | *D01F 6/94*(2006.01)i; *B01J 20/26*(2006.01)i; *D01D 5/04*(2006.01)i; *D01F 6/50*(2006.01)i; *D04H 1/728*(2012.01)i <br> FI:   D01F6/94 Z; B01J20/26 A; D01D5/04; D01F6/50 Z; D04H1/728 |

According to International Patent Classification (IPC) or to both national classification and IPC

| B. | FIELDS SEARCHED |
|---|---|

Minimum documentation searched (classification system followed by classification symbols)

D01F1/00-9/04; B01J20/00-20/34; D01D1/00-13/02; D04H1/00-18/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WANG Xuefen, et al., Poly(ethyleneimine) nanofibrous affinity membrane fabricated via one step wet-electrospinning from poly(vinyl alcohol)-doped poly(ethyleneimine) solution system and its application, Journal of Membrane Science, vol. 379, pp. 191-199 <br> p. 192, left column, line 47 to right column, line 16, p. 193, left column, lines 49-53 | 1-2, 4-9 |
| X | JP 2013-501163 A (AHLSTROM CORPORATION) 10 January 2013 (2013-01-10) <br> claim 1, examples | 1-2, 4-5, 7-9 |
| X | WO 2019/059368 A1 (KURARAY CO., LTD.) 28 March 2019 (2019-03-28) <br> claims 1, 4-5, paragraph [0028] | 1-2, 4-7, 9, 19 |
| X | JP 2016-215156 A (KURARAY CO., LTD.) 22 December 2016 (2016-12-22) <br> claims 1, 6, 9, example 7, paragraph [0016] | 1-7, 9 |
| X <br><br> A | JP 10-18125 A (SEKISUI PLASTICS CO., LTD.) 20 January 1998 (1998-01-20) <br> claim 8, fig. 1, example 2 | 10, 12-13, 15 <br><br> 1-9, 11, 14, 16-19 |
| A | JP 2011-63889 A (FUJIFILM CORP.) 31 March 2011 (2011-03-31) <br> paragraph [0021] | 1-19 |

☑ Further documents are listed in the continuation of Box C.        ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 April 2022** | **10 May 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT

| International application No. |
|---|
| **PCT/JP2022/008667** |

**C.    DOCUMENTS CONSIDERED TO BE RELEVANT**

| Category* | Citation of document, with indication, where appropriate, of the relevant passages | Relevant to claim No. |
|---|---|---|
| A | CN 212688254 U (NORTHWEST MINZU UNIVERSITY) 12 March 2021 (2021-03-12) abstract | 1-19 |

Form PCT/ISA/210 (second sheet) (January 2015)

## INTERNATIONAL SEARCH REPORT

| International application No. |
|---|
| **PCT/JP2022/008667** |

**Box No. III        Observations where unity of invention is lacking (Continuation of item 3 of first sheet)**

This International Searching Authority found multiple inventions in this international application, as follows:

The feature shared by claim 1 and claim 10 is "a fiber containing a polymer," but a fiber containing a polymer (synthetic fiber) is so well known that it is not necessary to provide any documents as an example thereof, and thus the shared feature is not a special technical feature.

Accordingly, the inventions in claims 1-19 are classified into the following two inventions.

(Invention 1) Claims 1-9 and 19

This is an invention relating to a fiber containing a polymer having an amino group. This invention is classified as invention 1.

(Invention 2) Claims 10-18

This is an invention relating to a method for manufacturing a fiber, the method including: discharging, from a discharge unit, a raw material having a compound group containing at least one selected from the group consisting of a monomer and a prepolymer, and sending the discharged object to a collection unit; and forming a polymer by adding energy to the compound group contained in the discharged object to allow the compound group to react in a space between the discharge unit and the collection unit. This invention is classified as invention 2.

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

Form PCT/ISA/210 (continuation of first sheet) (January 2015)

INTERNATIONAL SEARCH REPORT
Information on patent family members

| International application No. |
| --- |
| **PCT/JP2022/008667** |

| Patent document cited in search report | | | Publication date (day/month/year) | Patent family member(s) | | | Publication date (day/month/year) |
| --- | --- | --- | --- | --- | --- | --- | --- |
| JP | 2013-501163 | A | 10 January 2013 | US claim 15, examples WO EP KR CN MX | 2012/0125866 2011/015709 2292309 10-2012-0045026 102574037 2012001608 | A1 A1 A1 A A A | |
| WO | 2019/059368 | A1 | 28 March 2019 | TW | 201919759 | A | |
| JP | 2016-215156 | A | 22 December 2016 | (Family: none) | | | |
| JP | 10-18125 | A | 20 January 1998 | (Family: none) | | | |
| JP | 2011-63889 | A | 31 March 2011 | (Family: none) | | | |
| CN | 212688254 | U | 12 March 2021 | (Family: none) | | | |

Form PCT/ISA/210 (patent family annex) (January 2015)

## REFERENCES CITED IN THE DESCRIPTION

**Patent documents cited in the description**

- JP 2016017236 A